(19) Europäisches Patentamt / European Patent Office / Office européen des brevets

(11) **EP 3 593 883 B1**

(12) **EUROPEAN PATENT SPECIFICATION**

(45) Date of publication and mention
of the grant of the patent:
**18.12.2024 Bulletin 2024/51**

(21) Application number: **18763935.6**

(22) Date of filing: **07.03.2018**

(51) International Patent Classification (IPC):
*B23B 3/28* (2006.01)    *B32B 5/18* (2006.01)
*B32B 7/12* (2006.01)    *B32B 23/04* (2006.01)
*B32B 23/08* (2006.01)    *B32B 25/04* (2006.01)
*B32B 27/06* (2006.01)    *B32B 27/32* (2006.01)
*B32B 27/30* (2006.01)    *B03C 3/28* (2006.01)
*B32B 25/08* (2006.01)    *B32B 27/08* (2006.01)
*B32B 27/18* (2006.01)    *B32B 27/20* (2006.01)
*H01G 7/02* (2006.01)    *B01D 39/16* (2006.01)

(52) Cooperative Patent Classification (CPC):
**B01D 39/1692; B03C 3/28; B32B 3/28; B32B 5/18;**
**B32B 7/12; B32B 23/048; B32B 23/08;**
**B32B 25/045; B32B 25/08; B32B 25/14;**
**B32B 27/065; B32B 27/08; B32B 27/16;**
**B32B 27/18; B32B 27/205;**      (Cont.)

(86) International application number:
**PCT/JP2018/008877**

(87) International publication number:
**WO 2018/164207 (13.09.2018 Gazette 2018/37)**

(54) **ELECTRET-TREATED SHEET AND FILTER**

     ELEKTRET-BEHANDELTE FOLIE UND FILTER

     FEUILLE TRAITÉE PAR ÉLECTRET ET FILTRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **10.03.2017 JP 2017046213**

(43) Date of publication of application:
**15.01.2020 Bulletin 2020/03**

(73) Proprietor: **Yupo Corporation**
**Tokyo 101-0062 (JP)**

(72) Inventors:
• **SUGAMATA, Yutaro**
**Kamisu-shi**
**Ibaraki 314-0102 (JP)**
• **KOIKE, Hiroshi**
**Kamisu-shi**
**Ibaraki 314-0102 (JP)**
• **IIDA, Seiichiro**
**Tokyo 101-0062 (JP)**

(74) Representative: **Zimmermann & Partner**
**Patentanwälte mbB**
**Postfach 330 920**
**80069 München (DE)**

(56) References cited:
EP-A1- 2 479 024     EP-A1- 3 042 765
WO-A1-2015/056724    JP-A- 2011 084 735
JP-A- 2011 084 735    JP-A- 2015 071 297
JP-A- 2015 071 297    JP-A- 2016 039 275
JP-A- 2017 225 968    JP-A- S62 196 812

**(Cont. next page)**

(52) Cooperative Patent Classification (CPC): (Cont.)
**B32B 27/304; B32B 27/306; B32B 27/308;
B32B 27/32; B32B 27/322; B32B 27/34;
B32B 27/36; B32B 27/365; B32B 27/38;
B32B 27/40; B32B 27/42; H01G 7/021;
H01G 7/028;** B01D 2239/0435; B01D 2239/065;
B01D 2239/1208; B32B 2250/03; B32B 2250/04;

B32B 2250/05; B32B 2250/40; B32B 2255/10;
B32B 2255/102; B32B 2255/26; B32B 2262/101;
B32B 2264/025; B32B 2264/0271; B32B 2264/0285;
B32B 2264/10; B32B 2264/102; B32B 2264/104;
B32B 2264/107; B32B 2270/00; B32B 2307/204;
B32B 2307/518; B32B 2307/546; B32B 2307/724;
B32B 2307/732; B32B 2457/00; H01G 7/02

**Description**

Technical Field

The present invention relates to an electret-treated sheet and a filter using the same. More particularly, the present invention relates to an electrification type of air filter medium which loses little pressure, is excellent in filtration efficiency for dust and dirt, and easily recovers its dust collection efficiency even though having been cleaned.

Background Art

Conventionally, the structures having cavities are known, which are obtained by continuously folding and laminating films to form a specific three-dimensional structure. Furthermore, an electret filter is known which has a principle of electrifying (electret-treating) the film in the structure, and adsorbing dust and dirt by an electrostatic force when air containing dust and dirt passes through the cavity.

For example, in Patent Literature 1, a filter is disclosed which uses an electret-treated sheet and has a flow path for air formed therein, wherein a porosity of the electret-treated sheet is 1 to 70%, a cross-sectional ratio of the flow path for air in the filter is 10 to 99%, and the space charge density of the filter is 10 to 5000 nC/cm$^3$.

Generally, when the filter becomes dirty, there is a request for removing the dirt by washing with water and reuse the filter. However, a problem is that an electric charge on a surface of a constituent material of the filter vanishes after the filter has been cleaned.

In order to solve these problems, attempts have been made to solve the above described problems by coating the surface of the constituent material with a water-resistant material. For example, according to Patent Literature 2, known is a water-resistant electret sheet wherein a film having water resistance is fixed on both sides of an electret-treated sheet.

On the other hand, because a film of a thermoplastic resin tends to easily become charged, the water-resistant electret sheet has had a problem of causing an irregularity of a paper stack when the paper is printed in a field of synthetic paper, due to a repulsive force of static charge, and causing discharge between a carrier tape and a chip to damage the chip, in a semiconductor field.

In regard to these problems, in Patent Literature 3 for example, a laminate is disclosed which confines an electric charge in its inside by electrostatically charge, but controls a surface resistance of its surface to $1 \times 10^{-1}$ to $9 \times 10^{12}$ Ω by an antistatic agent. In addition, Patent Literature 4 discloses an antistatic sheet and an adhesive tape made of a three-layer structure each having a different dielectric constant, wherein a structure having the smallest dielectric constant among each layer is positioned in the middle. As will be described later, a relative dielectric constant of a substance suitable for an antistatic agent is higher than that of a general thermoplastic resin, and accordingly it can also be considered that both are based on the same principle. Patent Literature 5 discloses an electretized film, which has surface layers (B), wherein the surface layers (B) are protective layers for preventing leakage of charge accumulated on the core layer (A). Patent Literature 6 discloses that a dielectric constant of 1.1-5.0 (values measured at 100 Hz) is desirable for the surface layers to prevent leakage of charge accumulated in the inner layer. Patent literature 7 discloses a filter in which a flow path of air is formed by using an electretized sheet.

Citation List

Patent Literature

Patent Literature 1: Japanese Patent Laid-Open No. 2015-098022

Patent Literature 2: Japanese Patent Laid-Open No. 2008-018350

Patent Literature 3: Japanese Patent Laid-Open No. 2010-023502

Patent Literature 4: Japanese Patent Laid-Open No. 2004-136625

Patent Literature 5: EP 2 479 024 A1

Patent Literature 6: EP 3 042 765 A1

Patent Literature 7: WO2015/056724 A1

At present, the following problem still exists: when electret filters are used, and the filters after dust has been collected are cleaned and are going to be reused, the dust collecting capability is lowered, because the amount of electric charges of the electret-treated sheet decreases; and a satisfactory electret filter has not been obtained.

Summary of Invention

Technical Problem

An object of the present invention is to provide a low pressure-loss type of filter which has a high dust collecting capability and suppresses the lowering of the dust collecting capability even after cleaning.

Solution to Problem

The present inventors made various investigations in view of the above described problems, and as a result, have found that an electret-treated sheet which has a specific laminated structure, in particular, has a high dielectric layer between the surface layer and the back-surface layer recovers a surface potential after cleaning, and that a filter which has been obtained by using the above described electret-treated sheet and working the sheet into three-dimensional shape can solve the above described problem; and have arrived at the present invention.
Specifically, the present invention provides an electret-treated sheet according to claims 1 to 12 and a filter having a flow path for air according to claims 13 and 14.

Advantageous Effect of Invention

According to the present invention, there can be provided an electret-treated sheet of which the surface potential is easily recovered even though the sheet has been cleaned. In addition, according to the present invention, there can be provided an electrification type of filter which loses little pressure, and easily recovers dust and dirt collection efficiency even after cleaning, by using the electret-treated sheet.

Brief Description of Drawings

[Fig. 1] Fig. 1 shows one embodiment of an electret-treated sheet of the present invention.
[Fig. 2] Fig. 2 shows another embodiment of the electret-treated sheet of the present invention.
[Fig. 3] Fig. 3 shows another embodiment of the electret-treated sheet of the present invention.
[Fig. 4] Fig. 4 shows one example of a batch type corona-discharge treatment apparatus which can be used for producing an electret-treated sheet of the present invention.
[Fig. 5] Fig. 5 shows one example of a continuous type corona-discharge treatment apparatus which can be used for producing an electret-treated sheet of the present invention.
[Fig. 6] Fig. 6 shows a schematic view of an apparatus for producing electret-treated sheets which have been used for Examples of the present invention.
[Fig. 7] Fig. 7 shows a schematic view of a filter for evaluation, which has been used for Examples of the present invention.
[Fig. 8] Fig. 8 shows a schematic view of a method for measuring an adsorption force, which has been used for Examples of the present invention.

Description of Embodiments

The present invention will be described below in detail, but the description of the constitutional requirements described below is one example (representative example) of an embodiment of the present invention, and the present invention is not limited to the contents of the description.
When a word "to" is written between numerical values in this specification, the word indicates a range which contains the numerical values described before and after the word, as the minimum value and the maximum value, respectively.
In addition, when a word "(meth)acrylate" is written, the word means both of an acrylate and a methacrylate. The same also applies to derivatives of (meth)acrylic acid.
In addition, a "laminate" in the present specification means a laminated product which has a high dielectric layer between a surface layer and a back-surface layer, and does not have a static charge due to electrostatically charge.

In addition, the electret-treated sheet includes a form of a long sheet or a rolled sheet.

[Electret-treated sheet]

The electret-treated sheet of the present invention is an electret-treated sheet that includes: at least a surface layer, a high dielectric layer and a back-surface layer; and has the high dielectric layer between the surface layer and the back-surface layer, wherein the surface layer and the back-surface layer are each a thermoplastic resin film which has a relative dielectric constant of smaller than 6 at 100 kHz, the high dielectric layer is a material which has a relative dielectric constant of 6 or larger at 100 kHz, and the surface layer and the back-surface layer each have a static charge due to electrostatically charge.

(Layer structure)

As has been described above, the electret-treated sheet of the present invention is formed of a laminate that includes at least a surface layer, a high dielectric layer and a back-surface layer, and has the high dielectric layer between the surface layer and the back-surface layer.
The surface layer and the back-surface layer in the present invention are both the outermost layers of the electret-treated sheet (or laminate) of the present invention. In addition, it is preferable that the surface layer and the back-surface layer show a relative dielectric constant smaller than any of layers which exist in the inner side than those layers, because in the case, electric charges which exist on the surface of the outermost layer resist moving, and the attenuation of the electric charges resists occurring.
The surface layer and the back-surface layer (reverse surface) are each formed of thermoplastic resin films of which the respective relative dielectric constants are smaller than 6 at 100 kHz. The surface layer and the back-surface layer may be the same type of thermoplastic resin films, may be thermoplastic resin films having different compositions, and may be thermoplastic resin films formed by different forming methods. The types of usable thermoplastic resin films will be described later.
The electret-treated sheet of the present invention may have an adhesive layer between the surface layer and the back-surface layer, which will be described later. The adhesive layer may be one layer, two layers, or three or more layers.
In addition, the electret-treated sheet of the present invention may have a plurality of high dielectric layers between the surface layer and the back-surface layer, which will be described later. The number of high dielectric layers is preferably 1 to 10, and is more preferably 1 to 5.
In addition, the electret-treated sheet of the present invention may further have an intermediate layer formed of a thermoplastic resin film of which the relative dielectric constant is smaller than 6 at 100 kHz, which will be described later, between the surface layer and the back-surface layer. The number of intermediate layers is preferably 1 to 10, and is more preferably 1 to 5.
Examples of preferable aspects of the electret-treated sheet of the present invention include:

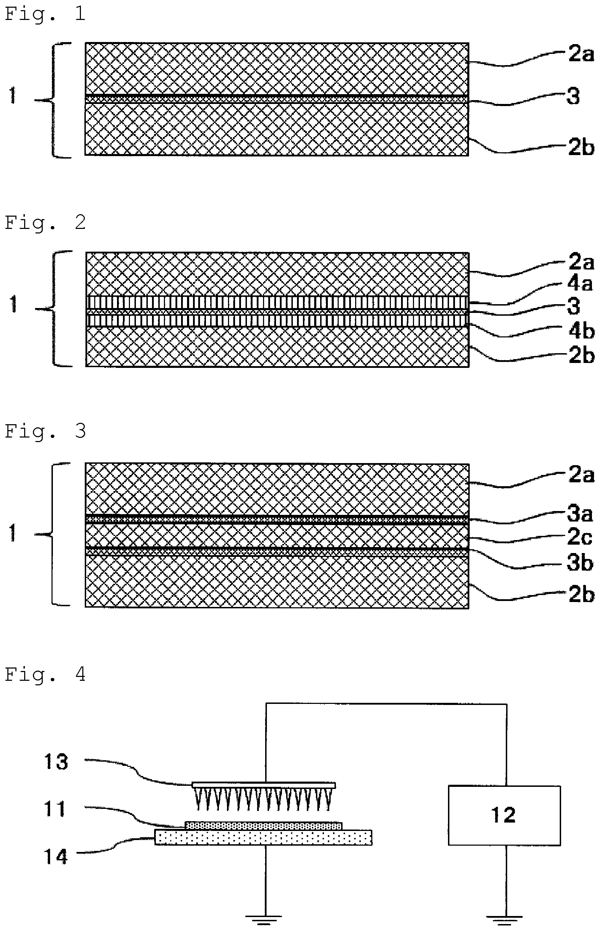

- electret-treated sheet 1 (see Fig. 1) in which layers are laminated in order of surface layer 2a/ high dielectric layer 3/ back-surface layer 2b;
- electret-treated sheet in which layers are laminated in order of surface layer/ adhesive layer/ high dielectric layer/ back-surface layer;
- electret-treated sheet 1 (see Fig. 2) in which layers are laminated in order of surface layer 2a/ first adhesive layer 4a/ high dielectric layer 3/ second adhesive layer 4b/ back-surface layer 2b;
- electret-treated sheet in which layers are laminated in order of surface layer/ first high dielectric layer/ adhesive layer/ second high dielectric layer/ back-surface layer;
- electret-treated sheet 1 (see Fig. 3) in which layers are laminated in order of surface layer 2a/ first high dielectric layer 3a/ intermediate layer 2c/ second high dielectric layer 3b/ back-surface layer 2b; and
- surface layer/ first adhesive layer/ first high dielectric layer/ second adhesive layer/ intermediate layer/ third adhesive layer/ second high dielectric layer/ fourth adhesive layer/ back-surface layer.

The surface resistivities of the surface and back surface of the electret-treated sheet of the present invention are preferably each independently $1 \times 10^{13}$ Ω or larger, and is more preferably each independently $1 \times 10^{14}$ Ω or larger. The surface resistivity is measured by a double ring method in accordance with JIS K 6911: 2006, under conditions of a temperature of 23°C and a relative humidity of 50%.
The thickness of the electret-treated sheet of the present invention is preferably 20 μm or larger, and is more preferably 50 μm or larger, from the viewpoint of strength and charge recoverability after cleaning when the electret-treated sheet of the present invention has been formed into a three-dimensional structure such as a filter which will be described later. On the other hand, the thickness of the electret-treated sheet is preferably 250 μm or smaller, and is more preferably 150 µm or smaller, from the viewpoint of an efficiency of the electrostatically charge and a flexibility suitable for a bending work of the electret-treated sheet.

In addition, the density of the electret-treated sheet is preferably 0.5 g/cm$^3$ or higher, and is more preferably 0.7 g/cm$^3$ or higher, from the viewpoint of the strength when the electret-treated sheet has been formed into a three-dimensional structure. On the other hand, the density of the electret-treated sheet is preferably 1.7 g/cm$^3$ or smaller, and is more preferably 1.5 g/cm$^3$ or smaller, from the viewpoint of the efficiency of the electrostatically charge.

It is preferable that the Gurley bending resistance of the electret-treated sheet is 0.3 to 1.0 mN. The Gurley bending resistance is measured in accordance with the method A (Gurley method) JIS L-1096: 2010.

The surface potential (static surface potential $E_A$) when the electret-treated sheet has been left standing for 24 hours under an environment of a temperature of 23°C and a humidity of 50% RH is preferably 0.3 kV or higher and is more preferably 1.0 kV or higher; and is preferably 15 kV or lower and is more preferably 10 kV or lower.

A surface potential when the electret-treated sheet has been immersed in ion-exchanged water for 1 minute under a condition of a temperature of 15°C, and has been pulled up, the water has been wiped off, and the sheet has been left standing under an environment of a temperature of 23°C and a humidity of 50% RH for 24 hours (surface potential $E_{24}$ after 24 hours after cleaning) is preferably 0.2 kV or higher, and is more preferably 0.3 kV or higher. The above described surface potential is preferably 5 kV or lower, and is more preferably 3 kV or lower.

In addition, when a surface potential at the time when the electret-treated sheet has been immersed in ion-exchanged water for 1 minute under a condition of a temperature of 15°C, has been pulled up, the water has been wiped off, and the sheet has been left standing under an environment of a temperature of 23°C and a humidity of 50% RH for 30 minutes is represented by a surface potential $E_{0.5}$ after 0.5 hours after cleaning, a difference ($E_{24} - E_{0.5}$) between the surface potential after 24 hours after cleaning and the surface potential after 0.5 hours after cleaning is preferably 0.1 kV or larger, and is more preferably 0.2 kV or larger. In addition, the above described difference is preferably 5 kV or smaller, and is more preferably 3 kV or smaller. A large difference between the surface potential after 24 hours after cleaning and the surface potential after 0.5 hours after cleaning means that a surface charge of a laminate, which has been lost by cleaning, is apparently easily recovered by a mirror image being formed by the internal charge.

The reason why the electret-treated sheet of the present invention having a high dielectric layer inside shows a high effect of apparently recovering a surface charge after an electric charge on the surface has been removed is considered to be because electric charges are easily retained in the interface between the high dielectric layer and an adjacent layer (surface layer, back-surface layer, intermediate layer or the like) to the layer. In addition, the above described reason can be also considered to be because the high dielectric layer itself has a charge retaining capability. Even though any of the considerations is correct, the reason is assumed to be because even though the surface of the electret-treated sheet has been cleaned with water, the internal charge is not lost and forms an electric charge of the mirror image on the surface with the passage of time. Furthermore, when the number of interfaces between the high dielectric layer and the layer adjacent to the layer, or the number of layers of the high dielectric layers increases, it can be expected that the total amount of electric charges increases which the electret-treated sheet can retain in its inside.

(High dielectric layer)

In the electret-treated sheet of the present invention, a high dielectric layer is provided between the surface layer and the back-surface layer. Here, the high dielectric layer is formed from a material of which the relative dielectric constant is 6 or larger when being measured at 100 kHz as a bulk material.

The material constituting the high dielectric layer may be a single material or may be a composite. The relative dielectric constant when the material constituting the high dielectric layer is the composite is a sum of the products of the relative dielectric constant of each material constituting the composite and the volume fraction of the material.

The relative dielectric constant of the material constituting the high dielectric layer is preferably 6 or larger, and is more preferably 7 or larger, from the viewpoint of increasing the difference ($E_{24} - E_{0.5}$) in the electret-treated sheet between the surface potential after 24 hours after cleaning and the surface potential after 0.5 hours after cleaning. On the other hand, the relative dielectric constant of the material constituting the high dielectric layer is preferably 5000 or smaller, and is more preferably 2000 or smaller.

The relative dielectric constant at 100 kHz can be determined on the basis of the principle of a capacitance of a parallel plate capacitor. The capacitance $C_x$ [F] of the parallel plate capacitor is proportional to an area A [m$^2$] of one side of the parallel plate electrodes, and is inversely proportional to a distance h [m] between the electrodes. Here, when the space between the parallel plate electrodes is filled with an insulator of which the relative dielectric constant is $\varepsilon_r$, the above described capacitance $C_x$ is expressed by the following Expression (1).

$$C_x = \varepsilon_r \times A/h \ \ldots \ (1)$$

As for measurement of the relative dielectric constant, the relative dielectric constant is determined by preparing a sample in which an object to be measured is sandwiched between plate-shaped electrodes, applying a voltage to the sample, sweeping the frequency, measuring the capacitance (Cx) at 100 kHz, and substituting the measured value into the above described Expression (1).

As for the method for preparing the sample, when coating with the object to be measured is possible, the metal electrode can be coated with the object to be measured, to provide a counter electrode thereon. On the other hand, when coating with the object to be measured is impossible, the object to be measured can be coated with an electro-conductive coating material.

The material constituting the high dielectric layer can include an organic substance and an inorganic substance. In general, the inorganic dielectric tends to be higher in a relative dielectric than an organic dielectric, and accordingly, it can be expected that an electrostatic property is enhanced by that the high dielectric layer contains an inorganic substance.

Examples of the inorganic dielectric include alumina, yttria, silicon nitride, aluminum nitride, zirconia, titanium oxide, barium sulfate, lead nitrate, zeolite, mica, glass fiber, soda-lime glass, calcium sodium tartrate, barium titanate, lead zirconate titanate (PZT), strontium zirconate titanate, barium zirconate titanate, barium strontium zirconate titanate, magnesium zirconate titanate, calcium zirconate titanate and barium calcium zirconate titanate. Among the materials, the barium titanate, the lead zirconate titanate (PZT) and the like are preferable from the viewpoint of charge retention.

On the other hand, the inorganic dielectric exists ununiformly in the laminate, accordingly the dielectric breakdown voltage of the laminate may be lowered, and accordingly the organic dielectric may be selected from the viewpoint of improving the dielectric breakdown voltage.

It is preferable for the organic dielectric to be a polymer-based substance which has an element of atomic number 7 or more in the main chain or a side chain of the polymer, or has a group of a conjugated system in a side chain of the polymer, from the viewpoint of enhancing the relative dielectric constant.

Examples of the element having an atomic number of 7 or more include N, O, F, Si, P, S, Cl, Br and I, from the viewpoint of ease of introduction and stability.

Examples of the group of the conjugated system include homocyclic compound groups such as a phenyl group, a substituted phenyl group and a naphthyl group; heterocyclic compound groups such as an imidazole group and a pyrazole group; and a carbonyl group, a carboxyl group, an acyl group, a cyano group, a phosphate group and a sulfo group.

Among the polymer type organic dielectrics containing the element of atomic number 7 or more, examples of a polymer containing an N atom include: polyethyleneimine-based polymers such as polyethylene imine, alkyl modified polyethylene imine having 1 to 12 carbon atoms, and poly(ethylene imine-urea); polyamine-based polymers such as polyamine polyamide, and an ethyleneimine adduct of polyamine polyamide; polypyrroles; and polyanilines.

In addition, examples of a polymer containing an O atom, among the polymer type organic dielectrics containing an element of atomic number 7 or more, include: acryl-based polymers such as an acrylic ester copolymer, a methacrylic ester copolymer, an acrylamide-acrylate copolymer, an acrylamide-acrylate-methacrylate copolymer, a derivative of polyacrylamide, and an oxazoline group-containing acrylate-based polymer; vinyl alcohol-based polymers such as polyvinyl alcohol and polyvinyl butyral; polyether polyols such as polyethylene glycol, polypropylene glycol and polytetramethylene glycol; cellulose; functional group-containing olefin-based polymers such as an ethylene/vinyl acetate copolymer, an ethylene/acrylate copolymer, maleic acid-modified polyethylene, and maleic acid-modified polypropylene; and a phenol resin, a polycarbonate-based resin and an epoxy resin.

Further, examples of a polymer having any atom of F, Cl, Br and I, among the polymer type organic dielectrics containing an element of atomic number 7 or more, include: fluorine-containing polymers such as polyvinylidene fluoride; chlorine-containing polymers such as a chloroprene rubber, an epichlorohydrin adduct of polyamine polyamide, a vinyl chloride resin, a vinyl chloride-vinyl acetate copolymer resin, a vinylidene chloride resin, a vinyl chloride-vinylidene chloride copolymer resin, a chlorinated ethylene resin and a chlorinated propylene resin; and polychlorotrifluoroethylene.

In addition, examples of a polymer having any atom of Si, P and S, among the polymer type organic dielectrics containing the element of atomic number 7 or more, include: silanol-modified polyvinyl alcohol and polythiophene.

In addition, examples of a polymer which has the group of the conjugated system in a side chain include polyvinyl pyrrolidone, a nitrocellulose resin, polyvinyl acetate, an ethylene-vinyl acetate copolymer, a styrene-acrylic copolymer resin and an acrylonitrile-butadiene copolymer.

As is understood from the above described examples, it cannot be strictly distinguished that the polymer has an element of atomic number 7 or more in the main chain or a side chain, from that the polymer has the group of the conjugated system in a side chain; and the polymer may have a plurality of elements of atomic number 7 or more in the main chain or a side chain, or may have two or more different elements as the element of atomic number 7 or more; and the group of the conjugated system, which contains the element of atomic number 7 or more, may exist in the side chain of the polymer. These structures exhibit an effect of enhancing the relative dielectric constant of the polymer.

In addition, the organic dielectric may be a compound known as an organic-based antistatic agent.

Examples of the antistatic agent include: low-molecular nonionic antistatic agents such as stearic acid monoglyceride, alkyl diethanolamines, sorbitan monolaurate, alkylbenzene sulfonates and alkyl diphenyl ether sulfonates;

electroconductive inorganic fillers such as ITO (indium-doped tin oxide), ATO (antimony-doped tin oxide) and graphite whisker; electronically conductive polymers such as polythiophene, polypyrrole and polyaniline, which exhibit electroconductivity due to conjugated electrons in the molecular chain; nonionic high-molecular type antistatic agents such as polyethylene glycol, polyoxyethylene diamine and a polyoxyethylene alkyl ether; water-soluble polymers having a quaternary ammonium salt type structure, such as polyvinyl benzyltrimethyl ammonium chloride and salts of quaternized product of polydimethyl aminoethyl methacrylate; anionic high-molecular type antistatic agents which contain a sulfonic acid group or a carboxylic acid group of a polyacrylic acid-based polymer, a maleic anhydride-based copolymer, a saponified compound of polyacrylonitrile, and the like, or salts of the groups; and alkali metal salt-containing polymers that are obtained by adding an alkali metal ion to a polymer which contains an alkylene oxide group and/or a hydroxyl group, such as lithium-added polyethylene oxide.

Among surface active agents, a high-molecular type surface active agent is preferable, from the viewpoint that thermal stability is adequate. On the other hand, the ionicity of the surface-active agent does not matter as long as the surface-active agent is compatible with the adhesive.

Among the materials constituting the high dielectric layer, the organic dielectrics are preferable, from the viewpoint of diversification such as imparting an adhesive function to the high dielectric layer. Among the organic dielectrics, polymer materials are preferable, from the viewpoints of adhesiveness of both of the surface layer and the back-surface layer to the high dielectric layer, and resistance to decomposition in steps downstream of the electrostatically charge. In addition, fluorine-containing resins such as polyvinylidene fluoride, polychlorotrifluoroethylene and polytetrafluoroethylene are preferable, from the viewpoint of enhancing the static surface potential of the electret-treated sheet.

As for the materials constituting the high dielectric layer, any one of the above described materials may be used alone, or two or more thereof may be mixed and used, from the viewpoint of the adjustment of the optimum dielectric constant for the application of the electret-treated sheet. In addition, the above described materials can be used in a form of being diluted by or being dispersed in an organic solvent or water. Among the above described materials, urethane resins such as polyether urethane, polyester polyurethane and acrylic urethane, or an acrylic ester copolymer are preferable, from the viewpoint of the stability and coating suitability of a coating material which has been obtained by the dissolution/mixture.

A wide range of high dielectric materials as described above can be used in the present invention, but it is preferable that the high dielectric layer in the present invention contains a water-soluble polymer or an alkali metal salt-containing polymer having a quaternary ammonium salt type structure, which gives little influence of environmental humidity on the antistatic performance, in particular, contains a water-soluble polymer having a quaternary ammonium salt type structure, of which the relative dielectric constant is 10 to 30.

The high dielectric layer can be also produced by mixing a low dielectric material and a high dielectric material, and in the case, if a film-like material which has been obtained by mixing the low dielectric material with the high dielectric material shows a relative dielectric constant of 6 or higher when having been measured as a bulk material at 100 kHz, the material can be handled as the high dielectric layer of the present invention.

The thickness of the high dielectric layer is preferably 0.01 $\mu$m or larger, and is more preferably 0.05 $\mu$m or larger, from the viewpoint of increasing the difference ($E_{24}$ - $E_{0.5}$) in the electret-treated sheet between the surface potential after 24 hours after cleaning and the surface potential after 0.5 hours after cleaning. In addition, for the same reason, the thickness of the high dielectric layer is preferably 0.005% or larger of the thickness of the electret-treated sheet, and is more preferably 0.01% or larger.

On the other hand, the thickness of the high dielectric layer is preferably 100 $\mu$m or smaller, and is more preferably 50 $\mu$m or smaller, from the viewpoint of enhancing the static surface potential. In addition, for the same reason, the thickness of the high dielectric layer is preferably 70% or smaller of the thickness of the electret-treated sheet, and is more preferably 35% or smaller.

(Adhesive material and adhesive layer)

The high dielectric layer is provided between the surface layer and the back-surface layer, but has preferably adhesiveness because the high dielectric layer adheres to the inside of any layer and constitutes the electret-treated sheet as a laminate. Because of this, it is preferable that at least one of the materials constituting the high dielectric layer has the adhesiveness.

On the other hand, when the high dielectric layer does not have the adhesiveness, the laminate can be formed by bonding the high dielectric layer to another layer through an adhesive layer. Accordingly, the adhesive material may be contained in the high dielectric layer or be contained in the adhesive layer, but in any case, a common substance can be used as the adhesive material. In general, it is preferable to mix the high dielectric material with the adhesive material and to provide the mixture inside the surface layer and/or the back-surface layer.

When an adhesive material is used in the high dielectric layer, the high dielectric layer contains the adhesive material preferably in an amount of 10% by mass or more based on the mass of the high dielectric layer, and contains more preferably in an amount of 30% by mass or more, from the viewpoint that the high dielectric layer exhibits adhesiveness. On the other hand, the high dielectric layer contains the adhesive material preferably in an amount of 99% by mass or less based on the mass of the high dielectric layer, and more preferably contains in an amount of 90% by mass or less, from the viewpoint that the high dielectric layer exhibits a predetermined relative dielectric constant.

On the other hand, when the adhesive layer is provided, the adhesive layer contains an adhesive material preferably in an amount of 20% by mass or more based on the mass of the adhesive layer, and contains more preferably in an amount of 50% by mass or more, from the viewpoint that the adhesive layer exhibits the adhesiveness. On the other hand, the adhesive layer may contain 100% by mass of the adhesive material based on the mass of the adhesive layer. In addition, for the same reason, the thickness of the adhesive layer is preferably 1.0 $\mu$m or larger, and is more preferably 10 $\mu$m or larger.

On the other hand, the thickness of the adhesive layer is preferably 50 $\mu$m or smaller, and is more preferably 5.0 $\mu$m or smaller, from the viewpoint of increasing a difference ($E_{24}$ - $E_{0.5}$) in the electret-treated sheet between the surface potential after 24 hours after cleaning and the surface potential after 0.5 hours after cleaning. In addition, for the same reason, the thickness of the adhesive layer is preferably 70% or smaller of the thickness of the electret-treated sheet, and is more preferably 35% or smaller.

The relative dielectric constant at 100 kHz of the adhesive layer is smaller than 6, and is preferably smaller than 4. In addition, the lower limit is ordinarily 1.1 or larger.

As for the properties of the adhesive materials, the adhesive materials include; a liquid adhesive having a form of a solution type or an emulsion type which uses water or an organic solvent as a medium; and a hot-melt type adhesive which is melted when having been heated and becomes applicable, and is solidified when having been cooled to exhibit the adhesiveness.

Examples of the liquid adhesives in the form of the solution type or the emulsion type include an ether resin, an ester resin, a urethane resin, a urea resin, an acrylic resin, an amide resin and an epoxy resin.

Examples of the ether resin include polyether polyols such as polypropylene glycol, polyethylene glycol and polytetramethylene glycol. The polyether polyols are obtained, for example, by subjecting a low-molecular polyol such as propylene glycol, ethylene glycol, glycerin, trimethylol propane, bisphenol A and ethylene diamine to ring-opening polymerization with an oxirane compound such as ethylene oxide, propylene oxide, butylene oxide and tetrahydrofuran.

The ester resin includes a dehydration condensation product of a polybasic acid and a polyhydric alcohol. Here, examples of polyvalent carboxylic acids include isophthalic acid, terephthalic acid, phthalic anhydride, isophthalic acid dimethyl ester, terephthalic acid dimethyl ester, adipic acid, azelaic acid, sebacic acid, glutaric acid and hexahydrophthalic anhydride. In addition, examples of the polyhydric alcohols include ethylene glycol, diethylene glycol, triethylene glycol, trimethylol propane, propylene glycol, dipropylene glycol, 1,6-hexanediol, neopentyl glycol, hydrogenated bisphenol A, 1,4-butanediol, 1,4-cyclohexanedimethanol, 2,2,4-trimethylpentane-1,3-diol and polyethylene glycol. At the time of polymerization, one or more types can be used from among the above described polybasic acids, and one or more types can be used from among the above described polyhydric alcohols.

Examples of the urethane resin include a condensation reaction product of a polyol and an isocyanate compound. Here, as for the polyols, one or more types can be used from among the above described polyhydric alcohols, ether resins and ester resins. In addition, examples of the isocyanate compound include: aliphatic isocyanates such as hexamethylene diisocyanate, 2,4-methylcyclohexane diisocyanate, diisocyanate cyclobutane, tetramethylene diisocyanate, o-(or m-, p-) xylylene diisocyanate, hydrogenated xylylene diisocyanate, dicyclohexylmethane diisocyanate, dimethyldicyclohexylmethane diisocyanate, lysine diisocyanate, cyclohexane diisocyanate, dodecane diisocyanate, tetramethylxylene diisocyanate and isophorone diisocyanate; aromatic isocyanates such as tolylene-2,4-diisocyanate, tolylene-2,6-diisocyanate, diphenylmethane-4,4'-diisocyanate, 3-methyldiphenylmethane-4,4'-diisocyanate, m-(or p-) phenylene diisocyanate, chlorophenylene-2,4-diisocyanate, naphthalene-1,5-diisocyanate, diphenyl-4,4'-diisocyanate, 3,3'-dimethyldiphenyl-1,3,5-triisopropylbenzene-2,4-diisocyanate carbodiimide-modified diphenylmethane diisocyanate and polyphenyl polymethylene polyisocyanate; and isocyanate monomers such as diphenyl ether diisocyanate. Furthermore, a polyisocyanate compound modified by a polyhydric alcohol may be used as the isocyanate compound, from the viewpoint of increasing the molecular weight and also imparting various performances such as adhesive strength and stability.

Examples of the urea resins include a condensation product of an amine compound and the above described isocyanate compound. Examples of the amine compound include: aliphatic amines such as ethylene diamine, 1,2-propylene diamine, 1,3-propylene diamine, 1,4-butane diamine, or hexamethylene diamine, diethylene triamine, triethylene tetramine and tetraethylenepentamine; alicyclic polyamines such as isophorone diamine, dicyclohexylmethanediamine, methylcyclohexanediamine, isopropylidene bis-4-cyclohexyldiamine and 1,4-cyclohexanediamine; and heterocyclic amines such as piperazine, methyl piperazine and aminoethyl piperazine.

As an example of the acrylic resin, the resin is representative that has been obtained by the addition polymerization of a (meth)acrylic compound, which uses an organic peroxide as a polymerization initiator. Specific examples of the acrylic compound include (meth)acrylic acid, methyl (meth)acrylate, ethyl (meth)acrylate, n-propyl (meth)acrylate, n-butyl (meth)acrylate, t-butyl (meth)acrylate, cyclohexyl (meth)acrylate, 2-ethylhexyl (meth)acrylate, lauryl (meth)acrylate, tridecyl (meth)acrylate, stearyl (meth)acrylate, 2-hydroxyethyl (meth)acrylate, 2-hydroxypropyl (meth) acrylate, (meth)acrylonitrile, (meth)acrylamide and glycidyl (meth)acrylate.

The amide resin includes a condensation product of an amine compound and a polybasic acid.

The epoxy resin is obtained as a condensation reaction product of hydroxy compounds or carboxylic compounds, and epihalohydrins, 1,2-diols or polyglycidyl ethers. The above described ether resin, ester resin, urethane resin, urea resin, acrylic resin and/or amide resin may be added to this condensation reaction system.

Examples of the hydroxy compounds include the above described polyhydric alcohols and polyhydric phenols. Examples of the polyhydric phenols include bisphenols such as 2,2-bis(4-hydroxyphenyl)propane (bisphenol A), 2,2-bis(4-hydroxyphenyl)butane (bisphenol B), 2,2-bis(4-hydroxyphenyl)ethane (bisphenol E), 2,2-bis(4-hydroxyphenyl) sulfone (bisphenol S), 2,2-bis(4-hydroxyphenyl)-4-methylpentane, 1,1-bis(4-hydroxyphenyl)-2-methylpropane, bis(4-hydroxyphenyl)phenylmethane, 2,2-bis(4-hydroxy-3,5-dimethylphenyl)methane, 2,2-bis(4-hydroxy-3,5-dimethylphenyl)ethane, 2,2-bis(4-hydroxy-3,5-dimethylphenyl)propane, 2,2-bis(4-hydroxy-3,5-dimethylphenyl)butane, 2,2-bis(4-hydroxy-3-methylphenyl) butane, 2,2-bis(4-hydroxy-3-methylphenyl)-2-phenylethane, biphenol, bis(4-hydroxyphenyl) ether and bis(4-hydroxyphenyl)ketone. Examples of the carboxylic compounds include the above described polyvalent carboxylic acids.

Among the above resins, the urethane resin is preferable, from the viewpoint of workability such that the condensation reaction of any one or more of the polyhydric alcohol, the ether resin and the ester resin with the isocyanate compound occurs even at room temperature.

Examples of the hot melt adhesives include: low density polyethylene, an ethylene/vinyl acetate copolymer, an ethylene/(meth)acrylate copolymer, metal salts thereof (so-called, ionomer resins), modified polyolefin-based resins such as chlorinated polyethylene and chlorinated polypropylene, thermoplastic elastomers such as an ethylene/$\alpha$-copolymer, a styrene/butadiene rubber and an acrylonitrile/butadiene rubber; and a polyamide-based resin, a polybutyral-based resin and a polyurethane-based resin. It is possible to add a tackifier to the hot melt adhesive in order to improve tackiness at the time of heating, or to add an antiblocking agent, a lubricant or the like thereto in order to reduce blocking at temperatures around room temperature.

Furthermore, it is possible to make the adhesive layer function also as the above described high dielectric layer, by adding a dielectric material to the above described adhesive and enhancing the relative dielectric constant of the adhesive layer. As a result, the adhesive layer can be consolidated with the high dielectric layer.

Here, as the dielectric material, the same type of materials as the inorganic dielectric or the organic dielectric, the antistatic agent, the surface-active agent or the like which constitute the above described high dielectric layer can be used.

(Surface layer and back-surface layer)

The electret-treated sheet of the present invention has the surface layer and the back-surface layer on the outermost surfaces, respectively. In other words, the surface layer and the back-surface layer are each the outermost layer of the electret-treated sheet of the present invention.

Any of the surface layer and the back-surface layer is formed of a thermoplastic resin film having a relative dielectric constant smaller than 6 at 100 kHz.

In addition, the relative dielectric constants of the surface layer and the back-surface layer are ordinarily each independently 1.1 or larger from the compositions and densities thereof; and are preferably 1.2 or larger from the viewpoint of enhancing an electric charge density, and are more preferably 1.25 or larger. On the other hand, the above described relative dielectric constants are preferably 4 or smaller, are more preferably 3.5 or smaller, and are further preferably 3 or smaller, from the viewpoint that the electret-treated sheet retains the electric charge for a long period of time.

It is preferable that volume resistivities of the surface layer and the back-surface layer are each $1 \times 10^{14}$ Ωcm or higher, from the viewpoint that the electret-treated sheet retains the electric charge by being subjected to the electrostatically charge. In addition, it is preferable that when a laminate including these layers is formed, both of the surface resistivities of the surface layer and the back-surface layer are $1 \times 10^{13}$ Ωcm or higher.

The surface layer and the back-surface layer are films containing a thermoplastic resin, and accordingly the above described insulation properties and formability become adequate.

Voids (voids) may be formed in the surface layer or the back-surface layer, from the viewpoint of a charge retaining force and flexibility of the electret-treated sheet. A method for forming the void includes: a wet method involving kneading a thermoplastic resin and a substance extractable with a solvent to form a sheet, stretching the obtained sheet as needed, and extracting the substance extractable; a dry method involving forming a sheet by using a thermoplastic resin which has a thermoplastic resin and at least one of an inorganic fine powder and an organic filler, and stretching the obtained sheet at a predetermined temperature; and a foaming method involving kneading a thermoplastic resin and a foaming agent to form a sheet, heating the obtained sheet, and making a foaming agent foam.

The water vapor permeability coefficients of the surface layer and the back-surface layer are each preferably in the range of 0.01 to 2.50, more preferably of 0.02 to 1.50, further preferably of 0.05 to 1.00, and particularly preferably of 0.10 to 0.70. When the water vapor permeability coefficient exceeds 2.50, there is a possibility that the electrostatic property under high humidity lowers, an adsorption performance of the film lowers, and the layers do not sufficiently exhibit the performance of an adsorption label. On the other hand, in order to adjust the water vapor permeability to lower than 0.01, it is necessary to use a special resin for the surface layer and the back-surface layer, and the degree of technical difficulty is high.

The above described water vapor permeability coefficient can be measured at 40°C and 90% RH by a cup method in accordance with JIS-Z-0208. The water vapor permeability coefficient ($g \times mm/(m^2 \times 24\ hr)$) is determined from the obtained water vapor transmission rate ($g/(m^2 \times 24\ hr)$) and a thickness (mm) of the film.

The thicknesses of the surface layer and the back-surface layer are each independently 10 $\mu$m or larger, and are more preferably 20 $\mu$m or larger, from the viewpoint of increasing the difference ($E_{24} - E_{0.5}$) in the electret-treated sheet between the surface potential after 24 hours after cleaning and the surface potential after 0.5 hours after cleaning. In addition, from the same viewpoint, the thicknesses of the surface layer and the back-surface layer are preferably 10% or larger, and are more preferably 35% or larger of the thickness of the electret-treated sheet.

On the other hand, from the viewpoint of flexibility, the thicknesses of the surface layer and the back-surface layer are preferably each independently 100 $\mu$m or smaller, and are more preferably 50 $\mu$m or smaller. In addition, from the same viewpoint, the thicknesses of the surface layer and the back-surface layer are preferably each independently smaller than 100% of the thickness of the electret-treated sheet. When the adhesive layer exists, the thicknesses of the surface layer and the back-surface layer are preferably 99% or smaller, and are more preferably 98% or smaller.

As for an apparatus for measuring the relative dielectric constant of each layer of the electret-treated sheet, a measuring apparatus is preferable which can apply a voltage of approximately 1 V and can arbitrarily select a measuring frequency in the range of 20 Hz to 3 MHz. Examples of the measuring apparatus include: an impedance analyzer (manufactured by Keysight Technologies, product name: E4990A); "LCR meter 4274A" of Yokogawa Electric Corporation; and "HIOKI 3522 LCR HiTESTER" of Hioki E.E. Corporation.

In order to measure the relative dielectric constant of each layer, a sample is prepared which is provided with metal electrodes on both surfaces of the layer, and is subjected to measurement. In the case of the surface layer or the back-surface layer, an electro-conductive coating material is applied to both surfaces of the layer and electrodes can be provided thereon. On the other hand, in the case of the high dielectric layer or the adhesive layer, the material of the layer is applied to a metal plate, and the electrode can be provided. Next, a voltage of 1 V is applied to the sample under environmental conditions of a temperature of 23°C and a relative humidity of 50%, and capacitances are measured at frequencies of 20 Hz to 1 MHz, and a capacitance at a frequency of 100 kHz (Cx) is used as a representative value.

The relative dielectric constant of each layer of the electret-treated sheet is calculated by the following expression.

$$\varepsilon r = Cx \times h/(\varepsilon_0 \times A)$$

$\varepsilon$r: relative dielectric constant of each layer of electret-treated sheet (-)
Cx: capacitance of each layer of electret-treated sheet (pF)
h: thicknesses of each layer of electret-treated sheet (m)
$\varepsilon_0$: dielectric constant in vacuum =8.854 (pF/m)
A: area of main electrode =$3.848 \times 10^{-4}$ ($m^2$)

(Thermoplastic resin)

The type of thermoplastic resin which is used for the surface layer and back-surface layer is not limited in particular, but because the relative dielectric constant when having been measured at 100 kHz is lower than that of the high dielectric layer, examples of the thermoplastic resin include: polyolefin-based resins such as high-density polyethylene, medium-density polyethylene, low-density polyethylene, a propylene-based resin and polymethyl-1-pentene; functional group-containing polyolefin-based resins such as an ethylene/vinyl acetate copolymer, an ethylene/acrylate copolymer, maleic acid modified polyethylene and maleic acid modified polypropylene; polyamide-based resins such as nylon-6 and nylon-6,6; thermoplastic polyester-based resins such as polyethylene terephthalate and a copolymer thereof, polybutylene terephthalate, and an aliphatic polyester; polycarbonate-based resins; and polystyrene-based resins such as atactic polystyrene and syndiotactic polystyrene.

Among the resins, it is preferable to use any one or more of the polyolefin-based resin and a polyolefin-based copolymer of which the relative dielectric constants are greatly different from that of the high dielectric layer, from the viewpoint of being excellent in insulation properties, workability, and a charge retention performance as the electret-treated sheet.

Examples of the polyolefin-based resins include (co)polymers formed from one or more of olefins such as ethylene, propylene, butylene, hexene, octene, butadiene, isoprene, chloroprene, methyl-1-pentene and a cyclic olefin. In addition, the polyolefin-based copolymer may be a copolymer of one or more of the above described olefins and one or more of other monomers which are polymerizable with the olefins, as long as the relative dielectric constant is smaller than 6 when the surface layer and the back-surface layer are formed thereof. In the present invention, the polypropylene-based resin is particularly preferable.

The thermoplastic resin in the surface layer and the back-surface layer can be blended with an inorganic fine powder and/or an organic filler as needed, and in general, it is preferable to blend the above described powder or filler. In the case, the amount of the above described powder or filler to be blended is ordinarily less than 50% by mass, is preferably 45% or less by mass, and is particularly 40% or less by mass.

(Inorganic fine powder and organic filler)

The surface layer and the back-surface layer can be blended with at least one of the inorganic fine powder and the organic filler, preferably, with the inorganic fine powder, from the viewpoint of improving the electrostatic property of the electret-treated sheet by forming voids (voids) therein and increasing the interface (surface area) between the resin and air.

Examples of the inorganic fine powder include calcium carbonate, calcined clay, silica, diatomaceous earth, white clay, talc, titanium oxide, barium sulfate, alumina, zeolite, mica, sericite, bentonite, sepiolite, vermiculite, dolomite, wollastonite and glass fiber. Among the powders, the calcium carbonate is more preferable, from the viewpoint of lowering the relative dielectric constants of the films which constitute the surface layer and the back-surface layer.

The volume average particle size of the inorganic fine powder refers to a value which has been measured by a particle size distribution analyzer by laser diffraction; and is preferably 0.01 $\mu$m or larger, is more preferably 0.1 $\mu$m or larger, and is further preferably 0.5 $\mu$m or larger, from the viewpoint of improving the electrostatic property of the electret-treated sheet by forming the voids in the surface layer and the back-surface layer. From the same viewpoint, the volume average particle size of the inorganic fine powder is preferably 15 $\mu$m or smaller, is more preferably 10 $\mu$m or smaller, and is further preferably 5 $\mu$m or smaller.

Examples of the organic filler include polymers such as polyethylene terephthalate, polybutylene terephthalate, polycarbonate, nylon-6, nylon-6,6, a cyclic polyolefin, polystyrene and polymethacrylate. Among the polymers, the polymers are preferable that have a melting point (for example, 170 to 300°C) or a glass transition temperature (for example, 170 to 280°C), each of which is higher than a melting point of the polyolefin-based resin, and that are incompatible. Furthermore, the polyethylene terephthalate is more preferable, from the viewpoint of lowering the relative dielectric constant of a film which constitutes the surface layer and the back-surface layer.

The average dispersion particle size of the organic filler refers to a value which has been measured by a particle size distribution analyzer by laser diffraction. The average dispersion particle size of the organic filler is preferably 0.01 $\mu$m or larger, is more preferably 0.1 $\mu$m or larger, and is further preferably 0.5 $\mu$m or larger, from the viewpoint of improving the electrostatic property of the electret-treated sheet by forming voids in the surface layer and the back-surface layer. On the other hand, from the same viewpoint, the average dispersion particle size of the organic filler is preferably 15 $\mu$m or smaller, is more preferably 10 $\mu$m or smaller, and is further preferably 5 $\mu$m or smaller.

(Additive)

A heat stabilizer (antioxidant), a light stabilizer, a dispersion agent, a lubricant and the like can be added to the thermoplastic resin composition of the surface layer and the back-surface layer as needed.

When the heat stabilizer is added, ordinarily, 0.001 to 1% by mass of the heat stabilizer is added into the thermoplastic resin composition. Examples of heat stabilizers include a sterically hindered phenol-based compound, a phosphorus-based compound and an amine-based compound.

When a light stabilizer is added, ordinarily, 0.001 to 1% by mass of the light stabilizer is added into the thermoplastic resin composition. Examples of the light stabilizer (antioxidant) include a sterically hindered amine-based compound, a benzotriazole-based compound and a benzophenone-based compound.

When the dispersion agent or the lubricant is added, ordinarily, 0.01 to 4% by mass of the additive is added into the thermoplastic resin composition. Examples of the dispersion agent and the lubricant include: modified polyolefins such as a silane coupling agent, and maleic acid-modified polypropylene; higher fatty acids such as oleic acid and stearic acid; metallic soap; and polyacrylic acid, polymethacrylic acid and salts thereof. By the dispersion agent and the lubricant, the dispersion of the inorganic fine powder is improved, and the handling property of the electret-treated sheet becomes adequate.

(Intermediate layer)

The electret-treated sheet may have an intermediate layer formed of a thermoplastic resin film layer having a relative dielectric constant of less than 6 at 100 kHz, in addition to the surface layer and the back-surface layer, from the viewpoint of giving a three-dimensional shape. A plurality of high dielectric layers can be laminated through the intermediate layer.

Examples of the thermoplastic resin which the intermediate layer contains include the same resins as those which have been included as the thermoplastic resin to be used for the above described surface layer and the back-surface layer; and examples of the inorganic fine powder, the organic filler and the additive which the layer can contain also include the same materials. In addition, the intermediate layer may have the same physical properties as those of the above described surface layer and back-surface layer.

[Production of electret-treated sheet]

Steps for producing the electret-treated sheet of the present invention include: a step of forming a laminate having a high dielectric layer between a surface layer and a back-surface layer; and a step of subjecting the laminate to electrostatically charge. The place of the electrostatically charge step in the steps for producing the electret-treated sheet can be appropriately determined in consideration of a complexity of the electrostatically charge step, handling of the electrostatically charge sheet, restrictions on the facility, a performance required to the filter, and the like. Specifically, the electrostatically charge in the step of forming the laminate may be performed to directly obtain the electret-treated sheet, the laminate may be subjected to the electrostatically charge to obtain the electret-treated sheet, or the laminate which is not subjected to the electrostatically charge may be worked into a three-dimensional shape of a filter, followed by subjecting the filter to the electrostatically charge to obtain the filter having the electret-treated sheet.

Among the methods, a method of subjecting the obtained laminate to the electrostatically charge is preferable from the viewpoint of facilitating the working into the three-dimensional shape, and making the electrode structure for the electrostatically charge not complicated. On the other hand, from the viewpoint of enhancing the dust collection efficiency of the filter, preferable is a method of working the laminate which has not been subjected to the electrostatically charge into a three-dimensional shape of the filter, and then subjecting the worked filter to the electrostatically charge to obtain the filter having the electret-treated sheet.

Here, a step of producing the laminate that contains the above described surface layer, back-surface layer and high dielectric layer, and a method for subjecting the obtained laminate to the electrostatically charge will be mainly described.

(Forming of thermoplastic resin film)

The surface layer, the back-surface layer and the intermediate layer which are each provided as needed are formed as a thermoplastic resin film.

Methods for forming the surface layer, the back-surface layer and the intermediate layer can each independently appropriately employ elemental technologies which are used in an ordinary method for forming a film. Examples of the elemental technologies include melt-kneading a thermoplastic resin composition of a raw material by an extruder, extruding the kneaded composition into a sheet shape by using a T die, an I die or the like, cooling the extruded sheet with a metal roll, a rubber roll, a metal belt or the like to form a sheet, stretching the obtained sheet at a predetermined temperature, stretching a sheet containing an inorganic fine powder or an organic filler to form voids in each layer, and subjecting the sheet to heat treatment; and by appropriately combining these elemental technologies, it becomes possible to obtain physical properties of a predetermined sheet suitable for the working into the filter.

Examples of the stretching method include: a longitudinal stretching method which uses a difference between circumferential speeds of rolls; a transverse stretching method which uses a tenter oven; a sequential biaxial stretching method which combines the longitudinal stretching with the transverse stretching; rolling; a simultaneous biaxial stretching method which combines a tenter oven with a linear motor; and a simultaneous biaxial stretching method which combines a tenter oven with a pantograph. In addition, examples of the stretching method include inflation molding in which the thermoplastic resin composition is extruded into a tube shape by using a circular die, and while expanding the tube by an internal pressure of the tube to a fixed ratio, the tube is cooled with air or water. The percent of stretch is not limited in particular, and is appropriately determined in consideration of characteristics and the like of the thermoplastic resin to be used for the surface layer and the back-surface layer.

Furthermore, these surface layer, back-surface layer and intermediate layer may be each a multilayer structure of two or more layers, from the viewpoints of improving a capability of sealing injected electric charges so as not to escape to the outside, and giving functionality such as suitability for secondary working such as bonding between electret-treated sheets.

When the thermoplastic resin film is formed into the multilayer structure, various well-known methods therefor can be used. Examples of the methods include: a multilayer die method using a feed block or a multi-manifold; and an extrusion lamination method using a plurality of dies. Alternatively, the multilayer die method and the extrusion lamination method may be used in combination.

(Lamination method)

A lamination method for obtaining a laminate including a surface layer, a back-surface layer, a high dielectric layer, and an intermediate layer which is provided as needed, include: an in-line method by a coextrusion method and an extrusion laminate method, which is similar to a method of multilayering the above described thermoplastic resin film; and an out-line method involving sandwiching the high dielectric layer or the like with a thermoplastic resin film which is the surface layer and another thermoplastic resin film which is the back-surface layer. Each layer may be bonded at the time of lamination by using the above described adhesive layer.

Generally, many materials for the high dielectric layer and materials for the adhesive layer are substances which are easily decomposed by heat, and are materials which are easily dissolved or dispersed in water or an organic solvent, the thicknesses of these layers may be thin, and so on; and accordingly as for a method of providing the high dielectric layer, preferable is a method of dissolving or dispersing a material of the high dielectric layer in water or an organic solvent to form a coating material, applying the coating material to the surface layer, the back-surface layer or the intermediate layer, and drying the coating material as needed.

Coating with these coating materials is performed, for example, by a die coater, a bar coater, a comma coater, a lip coater, a roll coater, a rod coater, a curtain coater, a gravure coater, a spray coater, a blade coater, a reverse coater, an air knife coater, a slide hopper or the like.

In the case of using a hot melt adhesive, the adhesive is coated on the surface of the surface layer, the back-surface layer, or the intermediate layer, by a method, for example, such as bead coating, curtain coating and slot coating.

Next, another layer is stacked thereon, and is pressure-bonded by a pressure roll, and the lamination is completed.

(Electrostatically charge)

Examples of a method of performing the electrostatically charge on the laminate include: frictional electrification; peeling electrification; an electro-electret treatment method involving applying corona discharge or a pulsed high voltage; a method of holding both surfaces of the thermoplastic resin film with a dielectric, and applying a high DC voltage to both of the surfaces; and a radio electret treatment method involving irradiating the thermoplastic resin film with an ionizing radiation of $\gamma$ rays, an electron beam or the like.

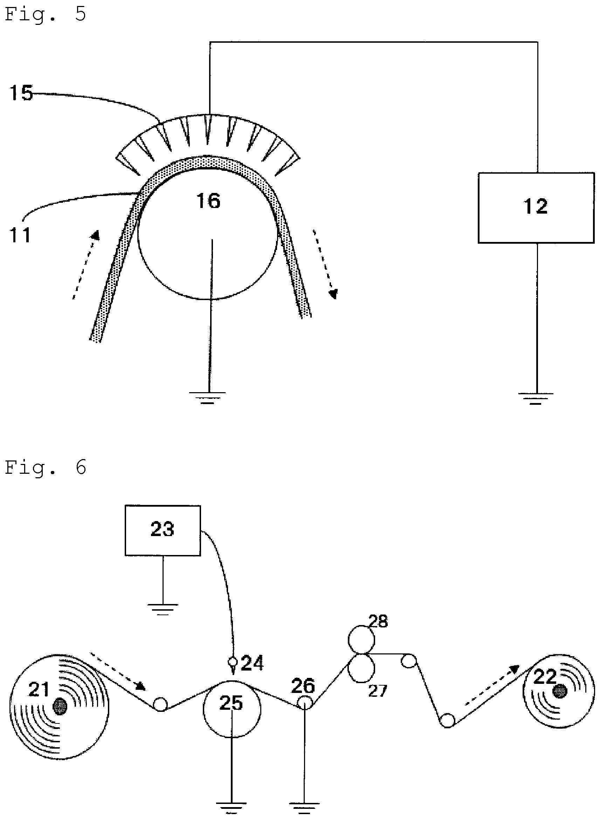

Among the above described methods, preferable methods are a batch type (see Fig. 4) that fixes the laminate between an application electrode which is connected to a direct-current high-voltage power supply and the earth electrode, or a continuous type (see Fig. 5) that passes the laminate between both of the electrodes.

A distance between a main electrode and a counter electrode is preferably 1 mm or larger, is more preferably 2 mm or larger, and is further preferably 5 mm or larger, from the viewpoint of accuracy for keeping both of the electrodes parallel to each other. On the other hand, the distance is preferably 50 mm or smaller, is more preferably 30 mm or smaller, and is further preferably 20 mm or smaller, from the viewpoint of stably causing corona discharge, because the corona discharge is dielectric breakdown accompanying the ionization of air.

It is preferable to use needle-shaped materials which are arranged innumerably at equal intervals or a metal wire for the application electrode, and to use a flat metal plate or a metal roll for the earth electrode.

The materials of the main electrode and the counter electrode are appropriately selected from electro-conductive substances, but ordinarily, an electrode made from a metal such as iron, stainless steel, copper, brass and tungsten, or an electrode made from carbon is used.

It is preferable to set the applying method at a direct current method.

Considering all these conditions together, particularly preferable is a method of using an apparatus in which the main electrode (application electrode) of a needle shape or a wire shape and a counter electrode (earth electrode) of a tabular shape or a roll shape are connected to the direct-current high-voltage power supply, placing a laminate on the counter electrode, applying a high DC voltage between the main electrode and the counter electrode, as illustrated in Figs. 4 to 6, to generate corona discharge, and thereby injecting electric charges to the laminate.

A voltage to be applied between the main electrode and the counter electrode is determined by electric characteristics such as the dielectric breakdown voltage of the laminate, a performance required to the electret-treated sheet (surface potential, relative dielectric constant and the like), shapes and materials of the main electrode and the counter electrode, the distance between the main electrode and the counter electrode, and the like.

The amount of electric charges to be introduced into the laminate by the electrostatically charge depends on the amount of an electric current which has flowed to the main electrode and the counter electrode during the treatment, and the amount of the electric current increases as the voltage between both of the electrodes is high. On the other hand, when the laminate causes a dielectric breakdown, the dielectric breakdown forms a short circuit between both of the electrodes, and accordingly the amount of electric charges due to the electrostatically charge theoretically becomes zero. The voltage to be applied is preferably 99% or lower, and is more preferably 95% or lower with respect to the dielectric breakdown voltage of the laminate, from the viewpoint of enhancing a treatment effect of the electret-treated sheet.

The voltage to be applied is preferably 1 kV or higher, is preferably 3 kV or higher, is more preferably 5 kV or higher, and is further preferably 10 kV or higher, from the viewpoint of the stability of a general DC corona discharge. On the other hand, the voltage to be applied is preferably 100 kV or lower, is more preferably 70 kV or lower, is further preferably 50 kV or lower, and is particularly preferably 30 kV or lower, from the viewpoint of the dielectric breakdown voltage of the laminate.

It is preferable to set the polarity of the electric power to be applied so that the main electrode side shows negative polarity, because the corona discharge treatment by the setting can be performed relatively stably.

The laminate after the electrostatically charge may be left as it is, or may be subjected to static elimination treatment. If the static elimination treatment is performed, the static elimination treatment shows an effect of avoiding troubles such as adsorption of dust and dirt in a manufacturing process including the working from the electret-treated sheet to the filter, sticking of the sheets, sticking between the sheet and the production facility, and the like. In addition, even though the electric charges on the surface of the electret-treated sheet have been removed by the static elimination treatment, the dust collection function of the filter is not impaired, because the mirror image of the electric charge retained in the inside of the electret-treated sheet appears on the surface of the electret-treated sheet with the passage of time.

An example of a method of the static elimination treatment includes a method of temporarily reducing/ removing the electric charge on the surface by using a known static elimination device such as a voltage application type static eliminator (ionizer) or a self-discharge type static eliminator. However, these general static eliminators can reduce/ remove the electric charges on the sheet surface, but cannot remove the electric charges which are accumulated inside the sheet. As a result, the remaining electric charges can impart the following property to the electret-treated sheet: a difference between the static surface potential and the surface potential $(E_{24} - E_{0.5})$ after 24 hours after cleaning is small.

In addition, the laminate after the electrostatically charge can be subjected also to heat treatment. Examples of methods of heat treatment include: a method of leaving the electret-treated sheet in an oven; and a method of applying hot air, infrared rays or the like to the electret-treated sheet. The temperature at the time of the heat treatment is preferably a temperature which is approximately 10°C higher than normal temperature. In addition, the temperature is preferably 30°C or higher. On the other hand, the temperature is preferably 120°C or lower, and is more preferably 100°C or lower. A period of time for the heat treatment is preferably 1 minute or longer, and is more preferably 10 minutes or longer. On the other hand, the period of time for heat treatment is preferably 500 hours or shorter, and is more preferably 100 hours or shorter.

(Amount of electric charges and surface potential)

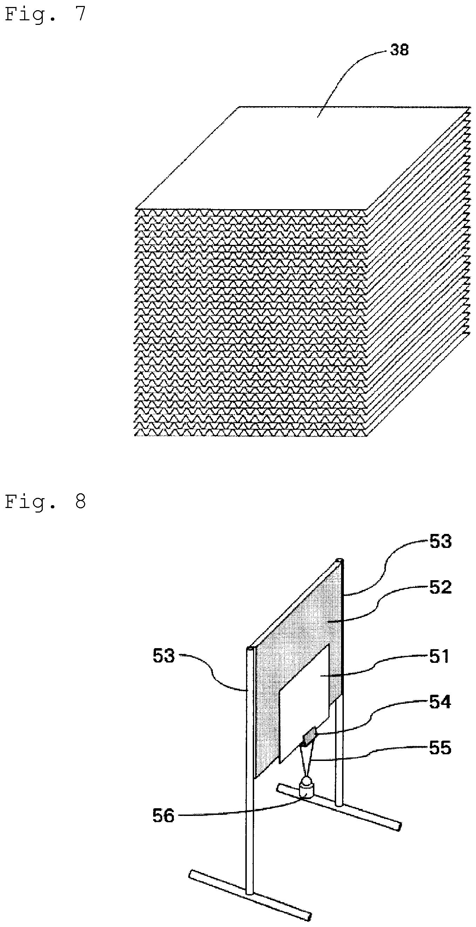

The electret-treated sheet of the present invention retains electric charges on its surface and inside due to the electrostatically charge, and thereby exerts an adsorption force. The surface charges vary due to static elimination treatment, environmental conditions (in particular, relative humidity), cleaning of the surface, and the like; and accordingly the adsorption force can be evaluated, for example, by measuring a surface potential (static surface potential) when the electret-treated sheet has been left standing for 24 hours under an environment of a temperature of 23°C and a humidity of 50% RH. There is a tendency that as the above described surface potential (static surface potential) becomes high, the adsorption force becomes high. The above described adsorption force can also be measured using an adsorption force measuring device shown in Fig. 8, as will be described later referring to the Examples.

Generally, the relationship among the amount of electric charges [C], capacitance [Q] and potential [V] is expressed by Q=CV, but as for the surface potential, the capacitance [Q] varies depending on the material, thickness, density and the like of the electret-treated sheet, and accordingly even though the amount of the electric charges [C] is the same, the potential [V] of the electret-treated sheet varies.

Examples of usable surface potential measuring devices include "High precision electrostatic sensor SK" manufactured by Keyence Corporation, and "High-voltage high-speed surface electrometer model 341 B" manufactured by Trek Japan. The measurement is performed under an environment of 23°C and a relative humidity of 50% so as not to be affected by the temperature and the humidity. In addition, the measurement is performed in the state in which the electret-treated sheet is suspended so as not to be affected by surrounding articles.

The surface potential of the electret-treated sheet shows ordinarily a potential of -1 to -30 KV under an environment of a temperature of 23°C and a humidity of 50% RH. In addition, the surface potential shows ordinarily a potential of 0 to -20 KV under an environment of a temperature of 40°C and a humidity of 80% RH.

[Filter and method for manufacturing the same]

The filter of the present invention can be obtained by three-dimensionally working the above described electret-treated sheet, or can be obtained by three-dimensionally working a laminate and then subjecting the obtained filter to the electrostatically charge. In addition, a sheet which is not subjected to the electrostatically charge may be contained in the filter. Here, the electrostatically charge after the three-dimensional working may be performed by an application of a batch type of method in methods of the electrostatically charge; and accordingly, here, the filter will be described which is obtained by three-dimensionally working the electret-treated sheet.

(Flow path structure)

The filter is an article in which a flow path for air has been formed using the electret-treated sheet. The three-dimensional structure is not limited in particular, and includes, for example, a cardboard structure, a honeycomb structure, a truss structure, a pillar structure and a rib structure.

The cardboard structure includes a structure that is obtained by alternately laminating an electret-treated sheet which has been worked into a corrugated sheet by corrugation working and an electret-treated sheet with a tabular shape, which is not subjected to corrugation working, and bonding or fusion-bonding these sheets. This structure has a strong structure as is estimated from a corrugated cardboard, and has advantages that the structure resists being crushed even when the amount of electric charges of the electret-treated sheet has been increased, and that the manufacture is simple.

In addition, the honeycomb structure includes a structure that has a shape formed by laminating pleated sheets having the same shape and bonding the contact points or contact surfaces of both the sheets, and specifically a structure such that a cross-sectional shape of the flow path becomes a hexagonal honeycomb core. In addition, even though the cross-sectional shape is not a hexagonal shape, there are structures that have cross-sectional shapes such as a pleat-shaped feather core, a corrugated core which is worked into a wave shape, and a roll core which is worked into a circular shape; and the structures are also included in modified honeycomb structures.

In addition, the three-dimensional structure may be a structure which has a pillar structure or a rib structure between two electret-treated sheets. In this case, it is preferable that the pillar structure or the rib structure is formed from an insulative material, from the viewpoint of reducing a decay speed of the electric charge of the electret-treated sheet.

A pattern which constitutes such a cross-sectional shape (for example, the hexagon in the honeycomb structure) of the flow path may be arranged at equal intervals at a fixed pitch, and may also be arranged at random. When such a pattern is arranged at the fixed pitch, the pitch is preferably in the range of 0.5 to 10 mm, and is more preferably in the range of 1 to 3 mm, from the viewpoint of the workability to the filter and the dust collection efficiency of dust and dirt.

Above all, the three-dimensional structure for the filter or the flow path for air can be obtained by alternately laminating the electret-treated sheet which has been worked into a corrugated sheet by corrugation working and the electret-treated sheet with a tabular shape, which is not subjected to corrugation working; and bonding the contact points of both of the sheets using a pressure-sensitive adhesive, or bonding the contact points by heat seal of a heat-sealable adhesive or the like.

(Cross-sectional ratio of flow path)

A cross-sectional ratio of the flow path for air in the filter is a ratio of the flow path for air, which occupies in the cross section of the filter. Accordingly, there is a tendency that as the value is lower, the strength of the filter increases, at the same time, a resistance to the flow of air increases, and the pressure loss increases. The cross-sectional ratio of the flow path for air is a value obtained by dividing the cross-sectional area of a sheet substrate, which corresponds to a product of a thickness of the sheet substrate and a length of the sheet substrate that was used for forming the flow path, by a cross-sectional area of the filter. In addition, this value can be also determined from observation of an image of the cross section.

The lower limit of the cross-sectional ratio of the flow path for air is preferably 10% or larger, is more preferably 30% or larger, and is further preferably 50% or larger, from the viewpoint of reducing the pressure loss with respect to the flow of air. On the other hand, the cross-sectional ratio of the flow path for air is preferably 99% or smaller, is more preferably 97% or smaller, and is further preferably 95% or smaller, from the viewpoint of the strength of the filter.

The filter of the present invention has a large difference ($E_{24} - E_{0.5}$) between the surface potential after 24 hours after cleaning and the surface potential after 0.5 hours after cleaning, accordingly is apt to recover the adsorption force even after the filter has been washed with water, and practically can withstand several times of water cleaning.

In the present invention, surface electrostatically charge may be performed by injecting electric charges into the laminated sheet having the high dielectric layer, or the electrostatically charge may be performed after forming the above described flow path structure.

Examples

[Test example]

(Thickness)

The thicknesses of all layers of the laminate and the electret-treated sheet were measured according to JIS K 7130: 1999 using a constant pressure thickness gauge(product name: PG-01J, manufactured by TECLOCK Co., Ltd.).
The thickness of each of the surface layer, the back-surface layer, the adhesive layer and the high dielectric layer was determined by cooling a sample to be measured with liquid nitrogen to a temperature of -60°C or lower; putting a razor blade (manufactured by Schick Japan K.K., product name: Proline blade) at a right angle to the sample placed on a glass plate; cutting the sample to prepare a sample for cross-sectional observation; observing a cross section of the obtained sample using a scanning electron microscope (product name: JSM-6490, manufactured by JEOL, Ltd.); discriminating boundaries among layers from a composition observation image; determining a ratio among the thicknesses of the observed layers; and further multiplying the ratio among the layer thicknesses by the thicknesses of all the layers of the laminate and electret-treated sheet.

(Relative dielectric constant)

A sample was obtained by screen-printing an electro-conductive coating material (manufactured by Fujikura Kasei Co., Ltd., product name: Dotite D-500) so as to form a circle with a diameter of 70 mm on one surface of the surface layer material or the back-surface layer material which was obtained in each Production Example; curing the coating material at normal temperature for 24 hours or longer to form a main electrode; subsequently, screen-printing the same electro-conductive coating material on the opposite surface so as to form concentric circles having a diameter of 100 mm; and curing the coating material at normal temperature for 24 hours or longer to form a counter electrode.
In addition, a sample was obtained by coating a metal aluminum sheet with a composition for an adhesive layer or a composition for a high dielectric layer, as a coating material, obtained in each Preparation Example, using an applicator so that a coating weight became 50 g/m$^2$; drying the coating material at 40°C for 1 minute; then overlapping another metal aluminum sheet on the coating surface; pressing the sheets by a roll; cutting the sheets to 10 cm square; and humidity-conditioning the cut sheets under environmental conditions of a temperature of 23°C and a relative humidity of 50%, for 1 day.
An impedance analyzer (manufactured by Keysight Technologies, product name: E4990A) was used as a device for measuring the capacitance. A voltage of 1 V was applied to each electret-treated sheet under environmental conditions of a temperature of 23°C and a relative humidity of 50%, the capacitance was measured at a frequency in the range of 20 Hz to 1 MHz, and the capacitance (Cx) at a frequency of 100 kHz was determined to be a representative value. Next, the relative dielectric constant was determined by calculation according to the following expression using the above value and the thickness which was separately measured.

$$\varepsilon r = Cx \times h/ (\varepsilon_0 \times A)$$

εr: relative dielectric constant of each layer of electret-treated sheet (-)
Cx: capacitance of each layer of electret-treated sheet (pF)
h: thicknesses of each layer of electret-treated sheet (m)
$\varepsilon_0$: dielectric constant in vacuum =8.854 (pF/ m)
A: area of main electrode =$3.848 \times 10^{-4}$ (m$^2$)

(Water vapor permeability)

The water vapor permeability coefficients of the surface layer and the back-surface layer which were obtained in each Production Example were measured at 40°C and 90% RH, by the cup method in accordance with JIS-Z-0208. The water vapor permeability coefficient (g$\times$mm/ (m$^2\times$24 hr)) was determined from the obtained water vapor transmission rate (g/ (m$^2\times$24 hr)) and film thickness (mm).

(Surface potential)

An aluminum plate was used as the ground, a distance between a probe of a surface potentiometer (manufactured by Kasuga Denki Inc., product name: KSD-3000) and the paper surface was set so as to become 1 cm, the surface potential was measured at five points, and the average was adopted as the value. The measurement conditions are shown below.

Potential $E_A$ immediately after the electric charge has been injected: the electric charges on the surface of the sample immediately after electrical charging using a batch type electrizer were removed using a static elimination brush, the sample was immediately placed on the above described aluminum plate, and the surface potential was measured.

Surface potential $E_{0.5}$ after 0.5 hours after cleaning: a sample was immersed in ion-exchanged water which was stored in a container, and was left there for 1 minute; the sample was taken out; excess water was wiped off with tissue; the sample was suspended for 0.5 hours under conditions of a temperature of 23°C and a relative humidity of 50% to be dried; the dried sample was placed on the above described aluminum plate; and the surface potential was measured.

Surface potential $E_{24}$ after 24 hours after cleaning: the sample of which the surface potential after 0.5 hours after cleaning was measured was suspended for 23.5 hours under conditions of a temperature of 23°C and a relative humidity of 50% again; the resultant sample was placed on the above described aluminum plate; and the surface potential was measured.

(Adsorption force)

The adsorption force was determined by cutting the electret-treated sheet which was obtained in each of the Examples and Comparative Examples into a size of 200 mm × 220 mm as shown in Fig. 8; storing the sheet for 24 hours under an environment of a temperature of 23°C and a relative humidity of 50%; sticking the electret-treated sheet 51 on a glass plate 52 of a device for measuring the adsorption force, of which the schematic view was shown in Fig. 8, so that an adsorption area became 200 mm × 200 mm and an area of 20 mm width in the lower end protruded out, in the same environment; attaching a clip 54 to the lower end of the electret-treated sheet 51; adding 10 g of a weight 56 provided with a fishing line 55, to the clip 54 one by one; and determining the adsorption force per square meter, which was converted from the weight of the weight 56 when the electret-treated sheet 51 slipped off the glass plate 52.

[Preparation of polymer having antistatic function]

(P-1)

To a four-necked flask mounted with a stirring device, a reflux condenser (capacitor), a thermometer and a dripping funnel, 100 parts by weight of polyethylene glycol monomethacrylate (manufactured by NOF Corporation, product name: BLEMMER PE-350), 20 parts by weight of lithium perchlorate (manufactured by Wako Pure Chemical Industries, Ltd., and reagent), 1 part by weight of hydroquinone (manufactured by Wako Pure Chemical Industries, Ltd., and reagent) and 400 parts by weight of propylene glycol monoethyl ether (manufactured by Wako Pure Chemical Industries, Ltd., and reagent) were introduced, and after the system was purged with nitrogen, were reacted at 60°C for 40 hours. A solution of a polymer (abbreviation P-1) was obtained that was formed of a polymer (polyethylene oxide) which had a weight average molecular weight of approximately 300 thousand, contained an alkali metal salt of which the lithium concentration was 0.6 wt% in the solid content, and had an antistatic function, by adding 5 parts by weight of stearyl methacrylate (manufactured by Wako Pure Chemical Industries, Ltd., and reagent), 5 parts by weight of n-butyl methacrylate (manufactured by Wako Pure Chemical Industries, Ltd., and reagent) and 1 part by weight of azobisisobutyronitrile (manufactured by Wako Pure Chemical Industries, Ltd., and reagent), to the above reaction product; subjecting the mixture to a polymerization reaction at 80°C for 3 hours: and then adding propylene glycol monoethyl ether thereto to adjust the solid content to 20 wt%.

(P-2)

To a four-necked flask mounted with a reflux condenser, a thermometer, a glass pipe for nitrogen substitution and a stirring device, 35 parts by mass of dimethylaminoethyl methacrylate, 20 parts by mass of ethyl methacrylate, 20 parts by mass of cyclohexyl methacrylate, 25 parts by mass of stearyl methacrylate, 150 parts by mass of ethyl alcohol and 1 part by mass of azobisisobutyronitrile were added, and were subjected to a polymerization reaction at 80°C for 6 hours, under a nitrogen gas stream.

A quaternary ammonium salt type copolymer (abbreviation P-2) was obtained of which the concentration of the solid content was 30% by mass, by subsequently adding 70 parts by mass of a solution containing 60% by mass of 3-chloro-2-hydroxypropylammonium chloride thereto; further making the mixture react at 80°C for 15 hours; and then distilling off the ethyl alcohol while dripping water.

[Preparation of polymer binder]

(P-3)

Polyethyleneimine (manufactured by Nippon Shokubai Co., Ltd., product name: Epomin P-1000, solid content concentration 100% by mass, abbreviation P-3) was used as it was.

(P-4)

An acrylic ester-based copolymer (manufactured by Toagosei Co., Ltd., product name: ARONTACK S-1511X, solid content concentration 40% by mass, abbreviation P-4) was used as it was.

[Curing agent]

Hexamethylene diisocyanate (manufactured by Tosoh Corporation, product name: HDI) was used as it was.

[Preparation of composition for adhesive layer/ high dielectric layer]

(Preparation Example 1: composition for adhesive layer)

The polymer binder P-4 was diluted by ethyl acetate to 30% by mass by a concentration of the solid content, and the curing agent was dripped over 5 minutes while the mixture was stirred. As shown in the following Table 1, a ratio of the solid content of P-4 to the curing agent was set so as to be 1: 1.

(Preparation Example 2: composition for high dielectric layer)

The polymer binder P-4 was diluted by ethyl acetate to 25% by mass by a concentration of the solid content, the polymer P-1 having the antistatic function was added to the mixture while the mixture was stirred, and then the stirring was continued for 15 minutes. Next, the curing agent was dripped over 5 minutes while the mixture was stirred, and then the concentration of the solid content was adjusted to 20% by mass by ethyl acetate. As shown in the following Table 1, ratios among the solid contents of P-1, P-4 and the curing agent were set so as to be 15: 42.5: 42.5.

(Preparation Example 3: composition for high dielectric layer)

A polymer P-2 having the antistatic function was added while the ion-exchanged water was stirred, and the mixture was stirred for 5 minutes. Next, the polymer binder P-3 was added to the mixture, and then the stirring was continued for 15 minutes. Next, the concentration of the solid content was adjusted to 1.5% by mass by ion-exchanged water. As shown in the following Table 1, a ratio between the solid contents of P-2 and P-3 was set so as to be 1: 4.

(Preparation Example 4: composition for high dielectric layer)

As shown in the following Table 1, a polymer P-1 having the antistatic function was used as it was.

[Table 1]

| Table 1 Preparation Examples of coating materials | | | | | | |
|---|---|---|---|---|---|---|
| Raw material used | | | Blending ratio (in terms of solid content / % by mass) | | | |
| | | | Preparation Example 1 | Preparation Example 2 | Preparation Example 3 | Preparation Example 4 |
| Polymer having antistatic function | P-1 | Lithium-added polyethylene oxide (0.6 wt% by lithium concentration in solid content) | - | 15 | - | 100 |
| | P-2 | Quaternary ammonium salt type copolymer | - | - | 20 | - |
| polymer binder | P-3 | Polyethyleneimine | - | - | 80 | - |
| | P-4 | Acrylic ester copolymer | 50 | 42.5 | - | - |

(continued)

| Table 1 Preparation Examples of coating materials | | | | | |
|---|---|---|---|---|---|
| Raw material used | | Blending ratio (in terms of solid content / % by mass) | | | |
| | | Preparation Example 1 | Preparation Example 2 | Preparation Example 3 | Preparation Example 4 |
| Curing agent | Hexamethylene diisocyanate | 50 | 42.5 | - | - |
| Relative dielectric constant | | 5 | 7 | 30 | 15 |

[Production of surface layer material and back-surface layer material]

(Production Example 1)

A commercially available biaxially stretched polypropylene film (manufactured by Toyobo Co., Ltd., product name: OT-P2108, thickness: 40 $\mu$m) was used as it was. As for this article, one side is subjected to corona discharge treatment, but is not subjected to antistatic treatment.

(Production Example 2)

A commercially available biaxially stretched polypropylene film (manufactured by Toyobo Co., Ltd., product name: OT-P 2102, thickness: 20 $\mu$m) was used as it was. As for this article, one side is subjected to corona discharge treatment, but is not subjected to antistatic treatment.

(Production Example 3)

A non-stretched sheet was obtained by melt-kneading a thermoplastic resin composition (a) which is formed of 70% by mass of a propylene homopolymer (manufactured by Japan Polypropylene Corporation, product name: NOVATEC PP FY 4), 10% by mass of high density polyethylene (manufactured by Japan Polyethylene Corporation, product name: NOVATEC HD HJ 360) and 20% by mass of heavy calcium carbonate (manufactured by BIHOKU FUNKA KOGYO CO., LTD., and product name: SOFTON 1800) by an extruding machine which was set at 230°C; then supplying the kneaded composition to an extrusion die which was set at 250°C; extruding the supplied composition into a sheet shape; and cooling the extruded sheet to 60°C by a cooling device.

The non-stretched sheet was heated to 135°C, and was stretched five times in the longitudinal direction using a difference between the circumferential speeds of the roll group.

Subsequently, a laminated sheet having a three-layer structure was obtained by melt-kneading a resin composition (b) which is formed of 45% by mass of a propylene homopolymer (manufactured by Japan Polypropylene Corporation, product name: NOVATEC PP MA 3), 10% by mass of high density polyethylene (manufactured by Japan Polyethylene Corporation, product name: NOVATEC HD HJ 360) and 45% by mass of heavy calcium carbonate (manufactured by BIHOKU FUNKA KOGYO CO., LTD., and product name: SOFTON 1800) by two extruding machines which were set at 250°C; extruding the kneaded composition into a sheet shape; and laminating the extruded sheet on each of both surfaces of the above described 5 times stretched sheet.

Subsequently, this laminated sheet was cooled to 60°C, was heated again to approximately 150°C using a tenter oven, and was stretched to 8.5 times in the transverse direction; and then the stretched sheet was subjected to heat treatment of heating the sheet to 160°C.

Subsequently, the laminated sheet was cooled to 60°C; the ear portion was slit; and then both surfaces of this laminated sheet were subjected to surface treatment by corona discharge to obtain a thermoplastic resin film which had a thickness of 80 $\mu$m and had a three-layer structure [each layer resin composition (b/a/b), each layer thickness 25 $\mu$m/ 30 $\mu$m/ 25 $\mu$m), and the number of stretching axes for each of the layers (uniaxis/biaxis/uniaxis).

[Electrostatically charge]

An electret-treated sheet (22) of each of the Examples and Comparative Examples was obtained using the electret-treated sheet production apparatus of which the schematic view is shown in Fig. 6, and by unwinding the laminate obtained in each of Examples 1 to 3 and Comparative Example 1 from a roll (21); subjecting the unwound laminate to charge injection treatment by a direct current type of corona discharge in a space between a needle-shaped application electrode (24) which is connected to a direct-current high-voltage power supply (23) and a roll-shaped earth electrode (25);

and winding the resultant laminate. As for conditions of the charge injection treatment, a distance between the needle-shaped application electrode (24) and the roll-shaped earth electrode (25) in Fig. 6 was set at 1 cm, and the applied voltage described in Table 3 was used.

Comparative Example 1: a laminate of a thermoplastic resin film (surface layer) of Production Example 1/ composition for adhesive layer of Preparation Example 1/ thermoplastic resin film (back-surface layer) of Production Example 1 was obtained by coating a thermoplastic resin film of Production Example 1, which became a surface layer, with a composition for the adhesive layer of Preparation Example 1 using a gravure coater so that a thickness after drying became 20 $\mu$m; and while drying the composition, sticking and pressure-bonding another thermoplastic resin film of Production Example 1 thereto, which became the back-surface layer. This laminate does not have the high dielectric layer.

Subsequently, this laminate was treated by the above described electrostatically charge method to provide an electret-treated sheet of Comparative Example 1 having a structure shown in Table 2.

Example 1: a laminate of a thermoplastic resin film (surface layer) of Production Example 1/ composition for high dielectric layer of Preparation Example 2/ thermoplastic resin film (back-surface layer) of Production Example 1 was obtained in the same way as in Comparative Example 1, except that instead of the composition for the adhesive layer of Preparation Example 1 used for coating in Comparative Example 1, coating with a composition for the high dielectric layer of Preparation Example 2 was performed so that a thickness after drying became 5 $\mu$m. This laminate has the high dielectric layer.

Subsequently, this laminate was treated by the above described electrostatically charge method to provide an electret-treated sheet of Example 1 having a structure shown in Table 2.

Example 2: one surface of a thermoplastic resin film of Production Example 3, which became a back-surface layer, was coated with a composition for the high dielectric layer of Preparation Example 3 using a gravure coater so that a coating weight after drying became 0.05 g/m$^2$, followed by drying. The thickness of the composition for the high dielectric layer after drying was smaller than 0.1 $\mu$m, and was in a negligible range.

Subsequently, a laminate of a thermoplastic resin film (surface layer) of Production Example 2/ composition for adhesive layer of Preparation Example 1/ composition for high dielectric layer of Preparation Example 3/ thermoplastic resin film (back-surface layer) of Production Example 3 was obtained by coating a coating surface of the above described composition for the high dielectric layer of Preparation Example 3 with the composition for the adhesive layer of Preparation Example 1 so that a thickness after drying became 10 $\mu$m; and while drying the composition, sticking and pressure-bonding a thermoplastic resin film of Production Example 2, which became a surface layer.

Subsequently, this laminate was treated by the above described electrostatically charge method to provide an electret-treated sheet of Example 2 having a structure shown in Table 2.

Example 3: the thermoplastic resin film of Production Example 1, which became a back-surface layer, was coated with a composition for the high dielectric layer of Preparation Example 4 using a comma coater so that a thickness after drying became 40 $\mu$m, followed by drying. Subsequently, a laminate having a structure of a thermoplastic resin film (surface layer) of Production Example 2/ composition for adhesive layer of Preparation Example 1/ composition for high dielectric layer of Preparation Example 4/ thermoplastic resin film (back-surface layer) of Production Example 1 was obtained by coating the coating surface of the above described composition for the high dielectric layer of Preparation Example 4 with the composition for the adhesive layer of Preparation Example 1 so that a thickness after drying became 7 $\mu$m; and sticking and pressure-bonding a thermoplastic resin film of Production Example 2, which became a surface layer.

Subsequently, this laminate was treated by the above described electrostatically charge method to provide an electret-treated sheet of Example 3 having a structure shown in Table 2.

In addition, the surface potential and the adsorption force of the electret-treated sheet of each Example and Comparative Example were measured. The results are shown in Table 3.

[Table 2]

Table 2 Constitution of substrates

| | All layers | Surface layer | | | | | Adhesive layer | | | | High dielectric layer | | | | Back-surface layer | | | | |
|---|---|---|---|---|---|---|---|---|---|---|---|---|---|---|---|---|---|---|---|
| | Thickness | Material | Relative dielectric constant at 100 HZ | Water vapor permeability | Thickness | Thickness ratio in all layers | Material | Relative dielectric constant at 100 Hz | Thickness | Thickness ratio in all layers | Material | Relative dielectric constant at 100 Hz | Thickness | Thickness ratio in all layers | Material | Relative dielectric constant at 100 Hz | Water vapor permeability | Thickness | Thickness ratio in all layers |
| Unit | μm | - | - | g·mm/m2·24 hr | μm | % | - | - | μm | % | - | - | μm | % | - | - | g·mm/m2·24 hr | μm | % |
| Example 1 | 85 | Production Example 1 | 2.2 | 0.3 | 40 | 47 | - | - | - | - | Preparation Example 2 | 7 | 5 | 6 | Production Example 1 | 2.2 | 0.3 | 40 | 47 |
| Example 2 | 110 | Production Example 2 | 2.2 | 0.4 | 20 | 18 | Preparation Example 1 | 5 | 10 | 9 | Preparation Example 3 | 30 | <0.1 | 0 | Production Example 3 | 2.2 | 0.3 | 80 | 73 |
| Example 3 | 107 | Production Example 2 | 2.2 | 0.4 | 20 | 19 | Preparation Example 1 | 5 | 7 | 7 | Preparation Example 4 | 15 | 40 | 37 | Production Example 1 | 2.2 | 0.3 | 40 | 37 |

Table 2 Constitution of substrates

| | All layers | Surface layer | | | | | Adhesive layer | | | | High dielectric layer | | | | Back-surface layer | | | | |
|---|---|---|---|---|---|---|---|---|---|---|---|---|---|---|---|---|---|---|---|
| | Thickness | Material | Relative dielectric constant at 100 HZ | Water vapor permeability | Thickness | Thickness ratio in all layers | Material | Relative dielectric constant at 100 Hz | Thickness | Thickness ratio in all layers | Material | Relative dielectric constant at 100 Hz | Thickness | Thickness ratio in all layers | Material | Relative dielectric constant at 100 Hz | Water vapor permeability | Thickness | Thickness ratio in all layers |
| Comparative Example 1 | 100 | Production Example 1 | 2.2 | 0.3 | 40 | 40 | Preparation Example 1 | 5 | 20 | 20 | - | - | - | - | Production Example 1 | 2.2 | 0.3 | 40 | 40 |

[Table 3]

| Table 3 Measurement results | | | | | | | |
|---|---|---|---|---|---|---|---|
| Example | Total thickness | Applied voltage | Surface potential | | | | Adsorption force |
| | | | $E_A$ | $E_{0.5}$ | $E_{24}$ | $E_{24}$-$E_{0.5}$ | |
| Unit | μm | kV | kV | | | | gf/m$^2$ |
| Example 1 | 85 | 10 | 2.2 | 0.07 | 0.55 | 0.48 | 70 |
| Example 2 | 110 | 8 | 5.0 | 0.00 | 2.20 | 2.20 | 100 |
| Example 3 | 107 | 15 | 1.7 | 0.01 | 1.52 | 1.51 | 50 |
| Comparative Example 1 | 100 | 20 | 5.1 | 0.12 | 0.20 | 0.08 | 5 |

[Manufacture of filter]

A single-face corrugated sheet was prepared by supplying the electret-treated sheet of Example 1 to a single facer which is used in a manufacture of paper corrugated cardboard; subjecting the electret-treated sheet to corrugation working so as to form a flute of which the height of the crest was 3 mm and the pitch was 3 mm; separately supplying the electret-treated sheet of Example 1 as a liner; and coating the top portions of the flute with a pressure-sensitive adhesive.

An electret-treated filter of Example 1 shown in Fig. 7 was obtained by coating the top portions of the other side of the flute of the prepared single-face corrugated sheet with an adhesive; laminating a separately prepared single-face corrugated sheet thereon so that the single-face corrugated sheets direct the same direction (the flute and the liner were alternately laminated); and repeating the lamination.

Similarly, a filter of Comparative Example 1 was prepared, in which the electret-treated sheet of Comparative Example 1 was used as the flute and the liner.

As is understood from the above described Table 3, as for electret-treated sheets (Examples 1 to 3) that each have a high dielectric layer which shows a relative dielectric constant of 6 or larger at 100 kHz, between the surface layer and the back-surface layer each formed of a thermoplastic resin film of which the relative dielectric constant is smaller than 6 at 100 kHz, it has been shown that a difference ($E_{24}$ - $E_{0.5}$) between the surface potential $E_{24}$ after 24 hours after cleaning and the surface potential $E_{0.5}$ after 0.5 hours after cleaning is large, and a capability of recovering the surface potential after cleaning is high. On the other hand, as for the electret-treated sheet (Comparative Example 1) that does not have a material of which the relative dielectric constant is 6 or larger at 100 kHz between the surface layer and the back-surface layer that are formed of a thermoplastic resin film of which the relative dielectric constant is smaller than 6 at 100 kHz, the above described ($E_{24}$ - $E_{0.5}$) has been small, and the capability of recovering the surface potential after cleaning has been low.

In addition, the filter that is obtained by working an electret-treated sheet of which the surface potential after cleaning is high is considered to have a high recovery rate of the dust collecting capability after cleaning.

The present application is based on Japanese Patent Application (Japanese Patent Application No. 2017-046213) filed on March 10, 2017.

Industrial Applicability

The filter using the electret-treated sheet of the present invention is a low pressure-loss type filter that has a high dust collecting capability and shows excellent recoverability of the dust collecting capability even though having been cleaned; accordingly is useful as filters of a dust collector, air conditioning equipment, an air conditioner, a humidifier and the like; and is extremely useful for dust collection in closed spaces such as offices, factories, clean rooms and homes.

Reference Signs List

1 Electret-treated sheet
2a Surface layer
2b Back-surface layer
2c Intermediate layer
3 High dielectric layer
3a First high dielectric layer

3b Second high dielectric layer
4a First adhesive layer
4b Second adhesive layer
11 Thermoplastic resin film
12 Direct-current high-voltage power supply
13 Needle-shaped application electrode
14 Plate-shaped earth electrode (planar array)
15 Needle-shaped application electrode
16 Roll-shaped earth electrode
21 Roll of laminate
22 Electret-treated sheet
23 Direct-current high-voltage power supply
24 Needle-shaped application electrode (horizontal single row arrangement)
25 Roll-shaped earth electrode
26 Guide roll (ground connection)
27 Nip roll
28 Nip roll
38 Filter for evaluation
51 Electret-treated sheet
52 Glass plate
53 Strut
54 Clip
55 Fishing line
56 Weight

## Claims

1. An electret-treated sheet comprising at least a surface layer, a high dielectric layer and a back-surface layer, while having the high dielectric layer between the surface layer and the back-surface layer, wherein

the surface layer and the back-surface layer are each a thermoplastic resin film having a relative dielectric constant of smaller than 6 at 100 kHz;
the high dielectric layer is a material having a relative dielectric constant of 6 or larger at 100 kHz; and
the surface layer and the back-surface layer each have a static charge due to electrostatically charge, and wherein the relative dielectric constant ($\varepsilon_r$) of each layer is calculated by the following expression: $\varepsilon_r = Cx \times h /(\varepsilon_o xA)$, being Cx, the capacitance of each layer of electret-treated sheet (pF), h,the thickness of each layer of electret-treated sheet (m), $\varepsilon_o$ dielectric constant in vacuum =8.854 (pF/m) and A, the area of main electrode =3.848×10$^{-4}$ (m$^2$).

2. The electret-treated sheet according to claim 1, wherein the high dielectric layer includes a water-soluble polymer having a quaternary ammonium salt type structure, of which a relative dielectric constant is 10 to 30.

3. The electret-treated sheet according to claim 1 or 2, wherein the surface layer and the back-surface layer are each a polyolefin-based resin film.

4. The electret-treated sheet according to any one of claims 1 to 3, wherein the high dielectric layer includes an alkali metal salt-containing polymer.

5. The electret-treated sheet according to any one of claims 1 to 4, wherein the high dielectric layer includes an adhesive material.

6. The electret-treated sheet according to any one of claims 1 to 5, wherein layers are laminated in order of the surface layer, the high dielectric layer and the back-surface layer.

7. The electret-treated sheet according to any one of claims 1 to 6, which further comprises an intermediate layer formed of a thermoplastic resin film layer having a relative dielectric constant of less than 6 at 100 kHz, wherein layers are laminated in order of the surface layer, a first high dielectric layer, the intermediate layer, a second high dielectric layer and the back-surface layer.

8. The electret-treated sheet according to any one of claims 1 to 4, which further comprises an adhesive layer between the surface layer and the high dielectric layer.

9. The electret-treated sheet according to any one of claims 1 to 4, wherein layers are laminated in order of

the surface layer, an adhesive layer, the high dielectric layer and the back-surface layer,
the surface layer, a first adhesive layer, the high dielectric layer, a second adhesive layer and the back-surface layer, or
the surface layer, a first high dielectric layer, an adhesive layer, a second high dielectric layer and the back-surface layer.

10. The electret-treated sheet according to any one of claims 1 to 4, which further comprises an intermediate layer formed of a thermoplastic resin film layer having a relative dielectric constant of less than 6 at 100 kHz, wherein layers are laminated in order of the surface layer, a first adhesive layer, a first high dielectric layer, a second adhesive layer, the intermediate layer, a third adhesive layer, a second high dielectric layer, a fourth adhesive layer and the back-surface layer.

11. The electret-treated sheet according to any one of claims 8 to 10, wherein the relative dielectric constant at 100 kHz of any of the adhesive layer and the first to fourth adhesive layers is smaller than 6.

12. The electret-treated sheet according to any one of claims 1 to 11, wherein the thicknesses of the surface layer and the back-surface layer are 10% or larger of the thickness of the electret-treated sheet.

13. A filter having a flow path for air formed therein using the electret-treated sheet according to any one of claims 1 to 12.

14. The filter according to claim 13, wherein a cross-sectional ratio of the flow path for air is 10% or larger and 99% or smaller.


**Patentansprüche**

1. Elektretbehandelte Folie, umfassend mindestens eine Oberflächenschicht, eine hochdielektrische Schicht und eine Rückoberflächenschicht, während sich die hochdielektrische Schicht zwischen der Oberflächenschicht und der Rückoberflächenschicht befindet, wobei

die Oberflächenschicht und die Rückoberflächenschicht jeweils ein Film aus thermoplastischem Harz sind, der eine relative Dielektrizitätskonstante von weniger als 6 bei 100 kHz hat;
die hochdielektrische Schicht ein Material ist, das eine relative Dielektrizitätskonstante von 6 oder mehr bei 100 kHz hat; und
die Oberflächenschicht und die Rückoberflächenschicht jeweils eine statische Ladung aufgrund von elektrostatischem Laden hat und wobei die relative Dielektrizitätskonstante ($\varepsilon_r$) jeder Schicht durch den folgenden Ausdruck berechnet wird: $\varepsilon_r = Cx \times h / (\varepsilon_o \times A)$, wobei Cx die Kapazität jeder Schicht der elektretbehandelten Folie (pF) ist, h die Dicke jeder Schicht der elektretbehandelten Folie (m) ist, $\varepsilon_o$ die Dielektrizitätskonstante im Vakuum = 8,854 (pF/m) ist und A die Fläche der Hauptelektrode = $3,848 \times 10^{-4}$ ($m^2$) ist.

2. Elektretbehandelte Folie nach Anspruch 1, wobei die hochdielektrische Schicht ein wasserlösliches Polymer aufweist, das eine Struktur vom Typ eines quaternären Ammoniumsalzes hat, dessen relative Dielektrizitätskonstante 10 bis 30 beträgt.

3. Elektretbehandelte Folie nach Anspruch 1 oder 2, wobei die Oberflächenschicht und die Rückoberflächenschicht jeweils ein Film aus Harz auf Polyolefinbasis sind.

4. Elektretbehandelte Folie nach einem der Ansprüche 1 bis 3, wobei die hochdielektrische Schicht ein alkalimetallsalzhaltiges Polymer aufweist.

5. Elektretbehandelte Folie nach einem der Ansprüche 1 bis 4, wobei die hochdielektrische Schicht ein Klebematerial aufweist.

**6.** Elektretbehandelte Folie nach einem der Ansprüche 1 bis 5, wobei die Schichten in der Reihenfolge der Oberflächenschicht, der hochdielektrischen Schicht und der Rückoberflächenschicht laminiert sind.

**7.** Elektretbehandelte Folie nach einem der Ansprüche 1 bis 6, die ferner eine Zwischenschicht umfasst, die aus einer Schicht von dem Film aus dem thermoplastischen Harz ausgebildet ist, die eine relative Dielektrizitätskonstante von weniger als 6 bei 100 kHz hat,
wobei die Schichten in der Reihenfolge der Oberflächenschicht, einer ersten hochdielektrischen Schicht, der Zwischenschicht, einer zweiten hochdielektrischen Schicht und der Rückoberflächenschicht laminiert sind.

**8.** Elektretbehandelte Folie nach einem der Ansprüche 1 bis 4, die ferner eine Klebeschicht zwischen der Oberflächenschicht und der hochdielektrischen Schicht umfasst.

**9.** Elektretbehandelte Folie nach einem der Ansprüche 1 bis 4, wobei die Schichten laminiert sind in der Reihenfolge

der Oberflächenschicht, einer Klebeschicht, der hochdielektrischen Schicht und der Rückoberflächenschicht,
der Oberflächenschicht, einer ersten Klebeschicht, der hochdielektrischen Schicht, einer zweiten Klebeschicht und der Rückoberflächenschicht, oder
der Oberflächenschicht, einer ersten hochdielektrischen Schicht, einer Klebeschicht, einer zweiten hochdielektrischen Schicht und der Rückoberflächenschicht.

**10.** Elektretbehandelte Folie nach einem der Ansprüche 1 bis 4, die ferner eine Zwischenschicht umfasst, die aus einer Schicht von dem Film aus thermoplastischem Harz ausgebildet ist, die eine relative Dielektrizitätskonstante von weniger als 6 bei 100 kHz hat,
wobei Schichten in der Reihenfolge der Oberflächenschicht, einer ersten Klebeschicht, einer ersten hochdielektrischen Schicht, einer zweiten Klebeschicht, der Zwischenschicht, einer dritten Klebeschicht, einer zweiten hochdielektrischen Schicht, einer vierten Klebeschicht und der Rückoberflächenschicht laminiert sind.

**11.** Elektretbehandelte Folie nach einem der Ansprüche 8 bis 10, wobei die relative Dielektrizitätskonstante bei 100 kHz von beliebigen der Klebeschicht und der ersten bis vierten Klebeschichten weniger als 6 beträgt.

**12.** Elektretbehandelte Folie nach einem der Ansprüche 1 bis 11, wobei die Dicken der Oberflächenschicht und der Rückoberflächenschicht 10% oder mehr der Dicke der elektretbehandelten Folie betragen.

**13.** Filter, der einen Strömungsweg für Luft aufweist, der darin unter Verwendung der elektretbehandelten Folie nach einem der Ansprüche 1 bis 12 ausgebildet wird.

**14.** Filter nach Anspruch 13, wobei ein Querschnittsverhältnis des Strömungswegs für Luft 10% oder mehr und 99% oder weniger beträgt.

**Revendications**

**1.** Feuille traitée par électret comprenant au moins une couche de surface, une couche hautement diélectrique et une couche de surface arrière, la couche hautement diélectrique étant située entre la couche de surface et la couche de surface arrière, dans laquelle

la couche de surface et la couche de surface arrière sont chacune un film de résine thermoplastique ayant une constante diélectrique relative inférieure à 6 à 100 kHz ;
la couche hautement diélectrique est un matériau ayant une constante diélectrique relative d'au moins 6 à 100 kHz ; et
la couche de surface et la couche de surface arrière ont chacune une charge statique due à une charge électrostatique, et dans laquelle la constante diélectrique relative ($\varepsilon_r$) de chaque couche est calculée par l'expression suivante : $\varepsilon_r = Cx \times h /(\varepsilon_o \times A)$, étant Cx, la capacité de chaque couche de feuille traitée par électret (pF), h, l'épaisseur de chaque couche de feuille traitée par électret (m), $\varepsilon_o$ constante diélectrique sous vide = 8,854 (pF/m) et A, l'aire de l'électrode principale = $3,848 \times 10^{-4}$ (m$^2$).

**2.** Feuille traitée par électret selon la revendication 1, dans laquelle la couche hautement diélectrique comprend un polymère hydrosoluble ayant une structure de type sel d'ammonium quaternaire, dont une constante diélectrique relative est de 10 à 30.

**3.** Feuille traitée par électret selon la revendication 1 ou 2, dans laquelle la couche de surface et la couche de surface arrière sont chacune un film de résine à base de polyoléfine.

**4.** Feuille traitée par électret selon l'une quelconque des revendications 1 à 3, dans laquelle la couche hautement diélectrique comprend un polymère contenant un sel de métal alcalin.

**5.** Feuille traitée par électret selon l'une quelconque des revendications 1 à 4, dans laquelle la couche hautement diélectrique comprend un matériau adhésif.

**6.** Feuille traitée par électret selon l'une quelconque des revendications 1 à 5, dans laquelle les couches sont stratifiées dans l'ordre suivant : couche de surface, couche hautement diélectrique et couche de surface arrière.

**7.** Feuille traitée par électret selon l'une quelconque des revendications 1 à 6, qui comprend en outre une couche intermédiaire formée d'une couche de film de résine thermoplastique ayant une constante diélectrique relative inférieure à 6 à 100 kHz,
dans laquelle les couches sont stratifiées dans l'ordre suivant : couche de surface, première couche hautement diélectrique, couche intermédiaire, deuxième couche hautement diélectrique et couche de surface arrière.

**8.** Feuille traitée par électret selon l'une quelconque des revendications 1 à 4, qui comprend en outre une couche adhésive entre la couche de surface et la couche hautement diélectrique.

**9.** Feuille traitée par électret selon l'une quelconque des revendications 1 à 4, dans laquelle les couches sont stratifiées dans l'ordre suivant

couche de surface, couche adhésive, couche hautement diélectrique et couche de surface arrière,
couche de surface, première couche adhésive, couche hautement diélectrique, deuxième couche adhésive et couche de surface arrière, ou
couche de surface, première couche hautement diélectrique, couche adhésive, deuxième couche hautement diélectrique et couche de surface arrière.

**10.** Feuille traitée par électret selon l'une quelconque des revendications 1 à 4, qui comprend en outre une couche intermédiaire formée d'une couche de film de résine thermoplastique ayant une constante diélectrique relative inférieure à 6 à 100 kHz,
dans laquelle les couches sont stratifiées dans l'ordre suivant : couche de surface, première couche adhésive, première couche hautement diélectrique, deuxième couche adhésive, couche intermédiaire, troisième couche adhésive, deuxième couche hautement diélectrique, quatrième couche adhésive et couche de surface arrière.

**11.** Feuille traitée par électret selon l'une quelconque des revendications 8 à 10, dans laquelle la constante diélectrique relative à 100 kHz de l'une quelconque parmi la couche adhésive et les première à quatrième couches adhésives est inférieure à 6.

**12.** Feuille traitée par électret selon l'une quelconque des revendications 1 à 11, dans laquelle les épaisseurs de la couche de surface et de la couche de surface arrière sont au moins 10 % de l'épaisseur de la feuille traitée par électret.

**13.** Filtre comportant un trajet d'écoulement pour l'air formé à l'intérieur de celui-ci utilisant la feuille traitée par électret selon l'une quelconque des revendications 1 à 12.

**14.** Filtre selon la revendication 13, dans lequel un rapport de section transversale du trajet d'écoulement pour l'air est supérieur ou égal à 10 % et inférieur ou égal à 99 %.

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015098022 A
- JP 2008018350 A
- JP 2010023502 A
- JP 2004136625 A
- EP 2479024 A1
- EP 3042765 A1
- WO 2015056724 A1
- JP 2017046213 A